# EUROPÄISCHE PATENTANMELDUNG

(11) **EP 4 651 047 A1**
(43) Veröffentlichungstag der Anmeldung: **19.11.2025**
(21) Anmeldenummer: 24175708.7
(22) Anmeldetag: 14.05.2024
(51) Int. Cl.: G06Q 10/047, G06Q 10/087, G05D 1/246, G05D 1/622, G05D 105/28, G05D 107/70, G05D 109/10

(54) **VERFAHREN ZUM VALIDIEREN EINES FAHRBEREICHS UND ZUM REALISIEREN UND BETREIBEN EINER WARENLOGISTIKEINRICHTUNG, SPEICHERMEDIUM UND WARENLOGISTIKEINRICHTUNG**

(71) Anmelder: Jungheinrich AG, 22047 Hamburg (DE)
(72) Erfinder: HARING, Stefan, 8510 Stainz (AT); LUTTENBERGER, Jürgen, 8435 Wagna (AT)
(74) Vertreter: Seemann & Partner Patentanwälte mbB

(57) **Zusammenfassung**

Das Verfahren zum Validieren zumindest eines Fahrbereichs 20 in einem 2D-Planungsmodell 18 einer Warenlogistikeinrichtung 16 umfasst die folgenden Schritte:
a) Bereitstellen des 2D-Planungsmodells 18 der Warenlogistikeinrichtung 16, aufweisend: einen Fahrbereich 20, einen Fahrspurengraph 22 und einen Nichtfahrbereich 28,
b) Bereitstellen eines 2D-Fahrzeugmodells 14 eines Flurförderzeugs 2, welches eine beim Betrieb in der Warenlogistikeinrichtung 16 eingenommene 2D-Fahrzeugfläche 15 beschreibt,
c) Bestimmen einer Trajektorie 48 des Flurförderzeugs 2 entlang zumindest einem Abschnitt des Fahrspurengraphs (22), insbesondere ausschließlich, auf der Grundlage der in dem Fahrspurengraph 22 vorhandenen statischen Parameter,
d) Bewegen des 2D-Fahrzeugmodells 14 entlang der Trajektorie 48 und Bestimmen einer von der 2D-Fahrzeugfläche 15 in dem 2D-Planungsmodell 18 bei der Bewegung des 2D-Fahzeugmodells 14 entlang der Trajektorie 48 überstrichenen Fläche 30,
e) Überprüfen, ob eine Überschneidung 32 zwischen der überstrichenen Fläche 30 und dem Nichtfahrbereich 28 vorliegt,
f) Ausgeben eines Ergebnisses der Validierung, wobei als Ergebnis zumindest eine Warnmitteilung 45 ausgegeben wird, falls eine Überschneidung 32 festgestellt wird.

## Beschreibung

Die Erfindung betrifft ein Verfahren zum Validieren von zumindest einem Fahrbereich in einem 2D-Planungsmodell einer Warenlogistikeinrichtung. Ferner betrifft die Erfindung ein computerlesbares Speichermedium. Die Erfindung betrifft außerdem ein Verfahren zum Realisieren einer Warenlogistikeinrichtung sowie ein Verfahren zum Betreiben einer Warenlogistikeinrichtung. Schließlich betrifft die Erfindung eine Warenlogistikeinrichtung.

Beim Betrieb von Flurförderzeugen, vor allem von fahrerlosen Flurförderzeugen, in einer Logistikeinrichtung ist die technische Durchführbarkeit von Transportaufträgen unter anderem abhängig von den in der Logistikeinrichtung zur Verfügung stehenden Fahrbereichen, der Konfiguration des Flurförderzeugs, beispielsweise von dessen Manövrierfähigkeit und dessen Abmessungen. Dies gilt sowohl für die Betrachtung des Betriebs eines einzelnen Flurförderzeugs als auch für den Betrieb mehrerer Flurförderzeuge in einem Logistiksystem. Ein weiterer Aspekt ist die Kollisionsvermeidung zwischen Flurförderzeugen. DE 10 2016 211 129 A1 offenbart ein Verfahren zum Überprüfen einer möglichen Kollision zwischen einem ersten fahrerlosen Flurförderzeug und einem zweiten fahrerlosen Flurförderzeug. Das Ergebnis dieser Überprüfung wird der Planung eines Transportauftrags zugrunde gelegt. Es werden zunächst 2D-Modelle der beiden Flurförderzeuge bereitgestellt. Vor der Durchführung eines bestimmten Transportauftrags wird eine erste überstrichene Fläche berechnet, die das erste Flurförderzeug während der Durchführung des Transportauftrags überstreicht. In gleicher Weise wird mit dem zweiten Flurförderzeug verfahren. Anschließend wird überprüft, ob sich die erste und die zweite überstrichene Fläche überlappen. Ist dies der Fall, besteht das Risiko einer Kollision bei der Durchführung der beiden Transportaufträge. Mindestens einer der beiden Transportaufträge wird geändert, um eine Kollision zu vermeiden.

In einer Logistikeinrichtung betriebene Flurförderzeuge weisen vielfach von entsprechenden Sensoren virtuell aufgespannte Schutzfelder auf. Wird ein solches Schutzfeld, beispielsweise durch ein spontan in das Schutzfeld eintretendes Objekt, ausgelöst, stoppt das Flurförderzeug seine Fahrt und setzt sie erst dann fort, wenn das Objekt das Schutzfeld wieder verlassen hat. Für die Betrachtung der Durchführbarkeit von Transportaufträgen ist es ebenfalls wichtig, dass die Schutzfelder des Flurförderzeugs während der Durchführung des Transportauftrags nicht ausgelöst werden, und sich nicht mit einem Nichtfahrbereich überschneiden. Ein solcher Nichtfahrbereich kann durch ein statisches Objekt festgelegt sein, beispielsweise durch ein baulich bedingtes Objekt, wie eine Wand oder eine Säule. Ein Nichtfahrbereich kann aber auch definiert sein, ohne dass ein solches Objekt vorhanden ist. Beispielweise kann der Betrieb der Flurförderzeuge auf einen bestimmten Bereich eingeschränkt sein, indem der verbleibende Bereich als Nichtfahrbereich definiert wird. Auch reine Fußgängerbereiche können beispielsweise als Nichtfahrbereiche definiert werden. Ein Transportauftrag ist nur dann durchführbar, wenn keine Überlappung zwischen einem der Schutzfelder des Flurförderzeugs und einem Nichtfahrbereich auftritt.

Es kann die Situation auftreten, dass ein Transportauftrag nicht ausgeführt werden kann, weil keine Route gefunden werden kann, auf der kein Schutzfeld ausgelöst wird, wenn das Flurförderzeug sie abfährt. Ferner kann bei der Durchführung von Transportaufträgen eine ungünstige Konstellation zwischen dem Flurförderzeug und einem oder mehreren Nichtfahrbereichen in dessen Umgebung auftreten, in der sich das Flurförderzeug "fest fährt". Ausgehend von der aktuellen Position findet das Flurförderzeug selbständig keinen Weg, der zum Zielort führt. Eine Weiterfahrt des Flurförderzeugs ist dann nur nach einem manuellen Eingriff möglich, mit dem die Situation aufgelöst wird.

Es ist eine Aufgabe der Erfindung, ein Verfahren zum Validieren zumindest eines Fahrbereichs, ein computerlesbares Speichermedium, ein Verfahren zum Realisieren und ein Verfahren zum Betreiben einer Warenlogistikeinrichtung sowie eine Warenlogistikeinrichtung anzugeben, wobei ein verbesserter Betrieb eines Flurförderzeugs in der Warenlogistikeinrichtung ermöglicht werden soll.

Die Aufgabe wird gelöst durch ein Verfahren zum Validieren von zumindest einem Fahrbereich in einem 2D-Planungsmodell einer Warenlogistikeinrichtung, die folgenden Schritte umfassend:
a) Bereitstellen des 2D-Planungsmodells der Warenlogistikeinrichtung, aufweisend: zumindest einen Fahrbereich, zumindest einen in dem Fahrbereich angeordneten Fahrspurengraph und zumindest einen Nichtfahrbereich, wobei in dem Fahrspurengraph statische Parameter vorhanden sind, welche bei der Berechnung einer Trajektorie des einen Flurförderzeugs entlang des Fahrspurengraphs berücksichtigt werden,
b) Bereitstellen eines 2D-Fahrzeugmodells des Flurförderzeugs, wobei das 2D-Fahrzeugmodell eine von dem Flurförderzeug beim Betrieb in der Warenlogistikeinrichtung in Anspruch genommene 2D-Fahrzeugfläche beschreibt,
c) Bestimmen einer Trajektorie des Flurförderzeugs entlang zumindest einem Abschnitt des Fahrspurengraphs, insbesondere ausschließlich, auf der Grundlage der in dem Fahrspurengraph vorhandenen statischen Parameter,
d) Bewegen des 2D-Fahrzeugmodells entlang der Trajektorie und Bestimmen einer von der 2D-Fahrzeugfläche in dem 2D-Planungsmodell bei der Bewegung des 2D-Fahzeugmodells entlang der Trajektorie überstrichenen Fläche,
e) Überprüfen, ob eine Überschneidung zwischen der überstrichenen Fläche und dem Nichtfahrbereich vorliegt,
f) Ausgeben eines Ergebnisses der Validierung, wobei als Ergebnis zumindest einer Warnmitteilung ausgegeben wird, falls eine Überschneidung festgestellt wird.

Es ist also mit anderen Worten vorgesehen, dass bei der Validierung des Fahrbereichs die Trajektorie, entlang der das Flurförderzeug zum Zweck der Validierung bewegt wird, zunächst basierend auf festgelegten Parametern des Fahrspurgraphen ermittelt wird. Die festgelegten Parameter des Fahrspurengraphs sind insbesondere zeitlich invariante Parameter. Es findet keine dynamische Simulation anhand eines tatsächlichen oder simulierten Verhaltens eines Flurförderzeugs während der Fahrt entlang einer spezifischen Route statt.

Als Route soll im Kontext der vorliegenden Beschreibung der festgelegte Weg eines Flurförderzeugs von einem Startpunkt zu einem Ziel bezeichnet werden. Um einen Transportauftrag zu erledigen, der beispielsweise darin besteht, dass sich das Flurförderzeug von dem Startpunkt zu einem Ziel bewegt, sei es im Rahmen einer Leerfahrt oder zum Transport einer Ware, werden beispielsweise mehrere mögliche Routen zwischen dem Startpunkt und dem Ziel berechnet.

Eine Trajektorie ist im Kontext der vorliegenden Beschreibung ein konkreter Pfad, auf dem sich das Flurförderzeug innerhalb der Warenlogistikeinrichtung bewegt. Eine Route kann aus mehreren Trajektorien zusammengesetzt sein, es ist ebenfalls denkbar, dass eine Route aus einer einzigen Trajektorie besteht. Die Trajektorie kann also einen Abschnitt der Route darstellen. Die Trajektorie orientiert sich an den in dem Fahrspurengraph vorhandenen statischen Parametern. Es können innerhalb dieser Parameter mehrere mögliche Trajektorien gefunden werden. Mit anderen Worten kann also ein bestimmter Abschnitt des Fahrspurengraphs oder auch der komplette Fahrspurengraph vielfach jedoch nicht notwendigerweise auf verschiedenen Trajektorien befahren werden.

Die Trajektorie ist zumindest für den zu überprüfenden Teilbereich des Fahrspurengraphs, der innerhalb des zu validierenden Fahrbereichs liegt, implizit vollständig festgelegt, bevor die eigentliche Überprüfung oder Validierung erfolgt. Die Überprüfung wird vorgenommen, indem das 2D-Fahrzeugmodell entlang der Trajektorie bewegt wird. Diese Bewegung erfolgt, indem das 2D-Fahrzeugmodell beispielsweise in vorgegebenen oder wählbaren Schritten entlang der Trajektorie bewegt wird und die 2D-Fahrzeugfläche für jeden dieser Schritte bestimmt und in das 2D-Planungsmodell übertragen wird. Anschließend werden die 2D-Fahrzeugflächen in dem 2D-Planungsmodell zusammengefügt und es wird die überstrichene Fläche bestimmt. Hierzu werden die 2D-Fahrzeugflächen in dem 2D-Planungsmodell addiert, wobei Bereiche, in denen sich die 2D-Fahrzeugflächen unterschiedlicher Positionen überlappen nicht mehrfach gezählt werden. Es entsteht ein Polygonzug, der die von dem 2D-Fahrzeugmodell in dem 2D-Planungsmodell der Warenlogistikeinrichtung während der Bewegung des 2D-Fahrzeugmodells entlang der Trajektorie überstrichenen Fläche umgibt. Abhängig von der gewünschten Genauigkeit, mit der diese überstrichenen Fläche bestimmt werden soll, kann für die Bewegung die Schrittweite angepasst oder gewählt werden.

Anschließend wird überprüft, ob eine Überschneidung zwischen der überstrichenen Fläche und dem Nichtfahrbereich vorliegt. Es erfolgt keine dynamische Anpassung der Trajektorie während der Überprüfung, indem das Fahrverhalten des Flurförderzeugs oder Sensorinformationen des Flurförderzeugs in einer spezifischen Fahrsituation simuliert werden. Ebenso wird bei der Erstellung der Trajektorie nicht das Fahrverhalten des Flurförderzeugs dynamisch simuliert. Die Erstellung der Trajektorie für die Validierung in dem Teilbereich des Fahrbereichs oder für den kompletten Fahrbereich erfolgt allein basierend auf statischen Parametern des Fahrspurgraphen, des Flurförderzeugs oder der Warenlogistikeinrichtung.

Als Ergebnis der Validierung wird insbesondere eine Warnmitteilung ausgegeben, sofern eine Überschneidung zwischen der überstrichenen Fläche und dem Nichtfahrbereich vorliegt. Eine solche Überschneidung weist auf einen Bereich hin, in dem es zu einem Konflikt zwischen beispielsweise einem Schutzfeld des Flurförderzeugs und einem Nichtfahrbereich kommen könnte. Der Benutzer wird also auf kritische Bereiche innerhalb der Warenlogistikeinrichtung hingewiesen und kann beispielsweise durch Veränderungen der Warenlogistikeinrichtung oder des Flurförderzeugs Abhilfe schaffen.

Als Ergebnis der Validierung kann ferner eine grafische Darstellung ausgegeben werden. Diese zeigt beispielsweise das 2D-Planungsmodell, in dem der Fahrspurengraph, die Nichtfahrbereiche und die überstrichene Fläche dargestellt ist. Die grafische Darstellung kann insbesondere den gesamten Fahrspurengraph oder den gesamten zu validierenden Fahrbereich zeigen. Die grafische Darstellung kann ferner dergestalt sein, dass die überstrichene Fläche in ihrer Gesamtheit dargestellt wird. Eine solche Darstellung kann sinnvoll sein, sofern beispielsweise lediglich ein Abschnitt des Fahrspurengraphs oder des Fahrbereichs validiert werden soll, die Bewegung des 2D-Fahrzeugmodells folglich lediglich in diesem Bereich stattfindet. Bereiche, in denen eine Überschneidung vorliegt, können graphisch hervorgehoben werden. In der grafischen Darstellung können insbesondere Kollisionen mit Nichtfahrbereichen hervorgehoben sein, beispielsweise farblich markiert.

Bei der Berechnung der Trajektorien können initial bereits Fahrzeugparameter, wie beispielsweise eine Fahrzeugbreite oder Kurvenradien berücksichtigt werden, um von Anfang an nicht befahrbare Trajektorien auszuschließen. Basierend auf einer ersten initialen Trajektorie wird anschließend eine Validierung durchgeführt und es wird überprüft, ob eine Überschneidung mit einem Nichtfahrbereich vorliegt. Als Ergebnis einer solchen Validierung kann eine Überschneidung mit einem Nichtfahrbereich gefunden werden. Um eine solche Überschneidung zu vermeiden, kann in dem vorhandenen Parameterraum, der insbesondere die statischen Fahrzeugparameter einschließt, eine alternative Trajektorie gesucht und eine erneute Validierung dieser alternativen Trajektorien durchgeführt werden.

Vorteilhaft kann mit dem Verfahren zum Validieren des Fahrbereichs bereits während einer Planungsphase mit geringem technischem Aufwand ermittelt werden, ob die Warenlogistikeinrichtung mit dem geplanten Fahrbereich zu einem späteren Zeitpunkt erfolgreich betrieben werden kann oder nicht. Es kann abgeschätzt werden, ob die grundsätzliche Möglichkeit besteht, Transportaufträge von dem Flurförderzeug innerhalb der geplanten Logistikeinrichtung erfolgreich durchzuführen oder ob der Erfolg des späteren Betriebs fraglich ist, weil es zu Überschneidungen zwischen der überstrichenen Fläche und dem Nichtfahrbereich kommt. Hierbei kann die Planungsphase die Planung einer Logistikeinrichtung oder die Planung des Einsatzes eines neuen Flurförderzeugs in einer vorhanden oder einer neue zu planenden Logistikeinrichtung umfassen, In der Planungsphase lassen sich solche Konflikte leicht lösen, indem beispielsweise eine Planung der Logistikeinrichtung verändert wird, beispielsweise in einem bestimmten Bereich ein breiterer Gang, eine breitere Durchfahrt oder dergleichen vorgesehen wird. Eine solche Anpassung betrifft eine Veränderung des Nichtfahrbereichs. Es können in der Planungsphase ebenso und auf einfache Art und Weise Änderungen am Fahrspurengraph oder am Fahrbereich selbst vorgenommen werden. Es kann ebenso festgestellt werden, dass die Anforderung unter den Gegebenheiten nicht in der Form realisierbar ist. Ein wichtiger weiterer Parameter sind die zur Verwendung in der Warenlogistikeinrichtung vorgesehenen Flurförderzeuge oder ein Typ des vorgesehenen Flurförderzeugs. Um eine Überschneidung zwischen der überstrichenen Fläche und dem Nichtfahrbereich zu vermeiden, können die eingesetzten Flurförderzeuge oder der zum Einsatz vorgesehene Typ des Flurförderzeugs verändert werden. Ferner können die in bestimmten Bereichen des Fahrbereichs durchgeführten Transportaufträge beispielsweise auf bestimmte Typen von Flurförderzeugen beschränkt werden. Beispielsweise können in engen Bereichen des Fahrbereichs nur kleine Flurförderzeuge zum Transport vorgesehen sein, also solche, die festgelegte Grenzwerte für Länge und/oder Breite des Flurförderzeugs und/oder den maximalen Kurvenradius unterschreiten und/oder für festgelegte Fahrmanöver ausgebildet sind, bspw. das Drehen auf der Stelle oder die Seitwärtsfahrt.

Im Ergebnis kann eine Datenbasis in Form des 2D-Planungsmodells zur Verfügung gestellt werden, die einen effizienten Betrieb der Flurförderzeuge in der Warenlogistikeinrichtung ermöglicht. Insbesondere wird auf oder zumindest unter Berücksichtigung dieser Datenbasis die Warenlogistikeinrichtung realisiert und es findet bevorzugt der spätere Betrieb auf der Grundlage dieser Datenbasis statt. Wird hingegen eine Warnmitteilung ausgegeben, ist mit einer eingeschränkten Funktionalität der Warenlogistikeinrichtung in der geplanten Form zu rechnen oder als Ergebnis ist festzustellen, dass die an den Fahrbereich oder die Durchführung von Transportaufträgen gestellten Anforderung unter den Gegebenheiten der Logistikeinrichtung nicht in der Form realisierbar sind. Der Planer oder zukünftige Betreiber der Warenlogistikeinrichtung steht vor der Aufgabe, diese Funktionseinschränkungen zu beseitigen und entsprechende Änderungen an der Planung der Warenlogistikeinrichtung vorzunehmen.

Gemäß einer Ausführungsform ist das Verfahren dadurch fortgebildet, dass der Fahrspurengraph Knoten und die Knoten verbindende Kanten aufweist. Als statische Parameter sind in dem Fahrspurengraph Informationen gemäß zumindest einem der folgenden Merkmale vorhanden:
- Positionen der Knoten in dem 2D-Planungsmodell,
- Positionen und/oder Orientierungen der Kanten in dem 2D-Planungsmodell,
- eine erlaubte Abweichung der Trajektorie von den Knoten und/oder Kanten.

Gegebenenfalls kann eine erlaubte Abweichung lediglich für die Knoten definiert sein, da sich das Befahren der Knoten mit einer erlaubten Abweichung auch auf Befahrung der die Knoten verbindenden Kanten auswirkt.

Gemäß einer weiteren Ausführungsform ist ferner vorgesehen, dass die Bestimmung der Trajektorie des Flurförderzeugs in Schritt c) ferner in Abhängigkeit von einer Orientierung der Bewegung, eines für die Bewegung angenommenen Lenkwinkels und/oder einer für die Bewegung angenommenen Geschwindigkeit des Flurförderzeugs erfolgt.

Die genannten Parameter haben eine Auswirkung auf die 2D-Fahrzeugfläche des 2D-Fahrzeugmodells. Beispielsweise verändert sich die 2D-Fahrzeugfläche in Abhängigkeit der aktiven Schutzfelder des Flurförderzeugs. Die Orientierung der Bewegung, also die Frage ob sich das Flurförderzeug beispielsweise in Vorwärtsfahrt oder Rückwärtsfahrt oder, sofern dieses dazu ausgebildet ist, in Seitwärtsfahrt befindet, hat einen Einfluss auf die während der Durchführung dieser Bewegung aktiven Schutzfelder. Die Anzahl oder Art der aktiven Schutzfelder verändert die 2D-Fahrzeugfläche in dem 2D-Planungsmodell. Ähnlich wirkt sich auch der Lenkwinkel oder die für die Bewegung angenommene Geschwindigkeit des Flurförderzeugs aus. In Abhängigkeit vom Lenkwinkel und von der Geschwindigkeit des Flurförderzeugs werden wiederum die entsprechenden Schutzfelder aktiviert. Diese haben einen direkten Einfluss auf die 2D-Fahrzeugfläche des Flurförderzeugs. Die genannten Parameter können bei der angenommenen Bewegung des Flurförderzeugs entlang der Trajektorie berücksichtigt werden.

Gemäß einer weiteren Ausführungsform ist ferner vorgesehen, dass bei der Bestimmung der Trajektorie in Schritt c) statische Fahrzeugparameter betreffend eine Manövrierfähigkeit des Flurförderzeugs berücksichtigt werden. Statische Fahrzeugparameter sind wiederum insbesondere zeitlich invariante Fahrzeugparameter. Die Manövrierfähigkeit des Flurförderzeugs ist ferner insbesondere durch zumindest einen der folgenden Parameter bestimmt:
- ein minimaler und/oder maximaler Kurvenradius,
- Abmessungen des Flurförderzeugs, beispielsweise maximale Abmessungen eines Chassis des Flurförderzeugs oder maximale Abmessungen des Flurförderzeugs einschließlich eines Hebezeugs, beispielsweise einer Lastgabel,
- Abmessungen des Flurförderzeugs einschließlich eines transportierbaren Lastträgers und/oder einer transportierbaren Last.

Ein minimal oder maximal möglicher Kurvenradius einer Kurve, die das Flurförderzeug befahren kann, ist in der Regel vom Typ des eingesetzten Flurförderzeugs abhängig. Ebenso verhält es sich mit den Abmessungen, beispielsweise den maximalen Abmessungen des Flurförderzeugs. Die maximalen Abmessungen einer zu transportierbaren Last bzw. der verwendeten Lastträger sind ebenfalls vom Typ des verwendeten Lastträgers abhängig und werden bei der Konfiguration einer Warenlogistikeinrichtung in der Regel im Voraus festgelegt.

Die statischen Fahrzeugparameter können für das Flurförderzeug oder einen Typ des Flurförderzeugs spezifisch sein, dies sind beispielsweise: ein minimaler Lenkwinkel, vorzugsweise ein geschwindigkeitsabhängiger minimaler Lenkwinkel, Abmessungen des Flurförderzeugs, Abmessungen von Schutzfeldern, vorzugsweise bei unterschiedlichen Geschwindigkeiten, und/oder bevorzugte Geschwindigkeiten des Flurförderzeugs.

Zur Berechnung einer Trajektorie entlang des Fahrspurengraphs können ferner weitere Informationen herangezogen werden. Gemäß einer Ausführungsform können für die Bestimmung der Trajektorie des Flurförderzeugs entlang des zumindest einen Abschnitts des Fahrspurengraphs vorbestimmte Rechenvorschriften zur Anwendung kommen und/oder es können hinterlegte Trajektorienmodelle auf die in dem Fahrspurengraph vorhandenen statischen Parameter angewandt werden.

Beispielsweise können festgelegte Routenoptionen zur Befahrung bestimmter Fahrsituationen im System hinterlegt sein. Dies betrifft beispielweise die Befahrung von Abbiegesituationen mit festgelegten Winkeln, insbesondere 90°-Kurven, die Befahrung einer Geradeausstrecke unmittelbar auf den Kanten, also mit keiner oder einer sehr geringen Abweichung, die Anfahrt an oder die Abfahrt von einer Ladestation zum elektrischen Laden des Flurförderzeugs, die Anfahrt oder Abfahrt von Palettenplätzen zur Aufnahme oder Abgabe von Paletten oder anderen Lastträgern. Die entsprechenden Routenoptionen können als vorab festgelegte Trajektorienabschnitte beispielsweise in einer Bibliothek oder Datenbank hinterlegt sein. Sie kommen zur Anwendung, sofern eine entsprechende Konfiguration des Fahrspurengraphs vorgefunden wird, wie beispielsweise eine 90°-Kurve oder eine Strecke mit Geradeausfahrt.

Die hinterlegten Rechenvorschriften zur Erstellung der Trajektorie in bestimmten Fahrsituationen können zu einem ähnlichen Ergebnis führen, wobei nicht auf Trajektorien aus einer Datenbank oder Bibliothek zurückgegriffen werden, sondern anhand der festgelegten Rechenvorschriften in einer bestimmten Situation des Fahrspurengraphs, eine entsprechende Trajektorie berechnet wird. Dies betrifft beispielsweise eine 90°-Kurve, die An- und Abfahrt zu oder von einer Ladestation oder einer Palettenstation.

Bei der Bestimmung der Trajektorie können ferner Merkmale der Warenlogistikeinrichtung berücksichtigt werden.- Dies sind beispielsweise: Die Lage von Nichtfahrbereichen, die Lage von Objekten, wie Wänden oder Säulen, die in der Regel als Nichtfahrbereiche gekennzeichnet werden, die Lage von Fahrbereichen mit besonderen Anforderungen, beispielsweise von Engstellen oder Palettenplätzen. In diesen Fahrbereichen mit besonderen Anforderungen können die Schutzfelder reduziert, abgeschaltet oder teilabgeschaltet werden. Dies hat eine unmittelbare Auswirkung auf die Größe und/oder Form der 2D-Fahrzeugfläche.

Die Überprüfung, ob zumindest eine Trajektorie des Flurförderzeugs entlang des zumindest einen Abschnitts des Fahrspurengraphs gefunden werden kann und, ob zumindest eine Überschneidung zwischen der überstrichenen Fläche und dem Nichtfahrbereich vorliegt, erfolgt basierend auf der aus den oben genannten Parametern abschließend ermittelten Trajektorieninformation, indem iterativ das 2D-Fahrzeugmodell entlang der Route bewegt und überprüft wird, ob die Trajektorie prinzipiell befahrbar ist und ob bei der Befahrung eine Überschneidung zwischen dem 2D-Fahrzeugmodell und einem Nichtfahrbereich oder sonstigen Objekten, die zusätzlich auch in Form eines Nichtfahrbereichs berücksichtigt sein können, der Warenlogistikeinrichtung ermittelt wird.

Wie oben bereits erwähnt, ist die Lage der Trajektorie vor dieser Überprüfung festgelegt. Wird für eine bestimmte Fahrsituation festgestellt, dass eine Überschneidung vorliegt oder dass diese so mit dem Fahrzeug nicht befahrbar ist, kann für diesen Teilbereich oder die gesamte Trajektorie eine Alternative ermittelt werden. Hierzu wird beispielsweise wiederum basierend auf den statischen Parametern eine alternative Trajektorie ermittelt. Beispielsweise kann für die Befahrung einer 90°-Kurve eine andere festgelegte Trajektorienoption verwendet oder gewählt werden. Diese andere und in diesem Sinne alternative Trajektorienoption ergibt sich beispielsweise aus der Anwendung der vorbestimmten Rechenvorschriften und/oder der hinterlegten Trajektorienmodelle.

Das Verfahren gemäß Aspekten der Erfindung ermöglicht die vergleichsweise aufwandsarme Validierung des Betriebs einer Warenlogistikeinrichtung in dem Sinne, dass festgestellt werden kann, ob der Betrieb der Anlage prinzipiell möglich ist. Dies betrifft unter anderem die Feststellung, ob der Fahrspurgraph in der Warenlogistikeinrichtung prinzipiell vollständig befahrbar ist. Diese Validierung erfolgt im Vergleich zu bekannten Simulationsverfahren aufwandsarm, also unter Einsatz geringerer datentechnischer Mittel, unter Inkaufnahme des Nachteils, dass das tatsächliche Verhalten von Fahrzeugen beim Betrieb der Warenlogistikeinrichtung nur bedingt nachgebildet werden kann.

Die von dem Flurförderzeug in der Warenlogistikeinrichtung eingenommene Fläche, also die 2D-Fahrzeugfläche, ist insbesondere eine dynamische Fläche. Sie verändert sich beispielsweise ortsabhängig, also in Abhängigkeit des jeweiligen Aufenthaltsorts des Flurförderzeugs auf der Trajektorie. Ferner kann sich die Fläche in Abhängigkeit von der Fahrsituation des Flurförderzeugs verändern, beispielsweise in Abhängigkeit von der Fahrtrichtung, der Fahrorientierung, der Geschwindigkeit und/oder dem Lenkwinkel des Flurförderzeugs. In einer einfachen Ausführungsform kann die 2D-Fahrzeugfläche während der Durchführung der Validierung des Fahrbereichs als Fläche mit konstanter Form und Ausdehnung angenommen werden.

Gemäß einer vorteilhaften Ausführungsform ist vorgesehen, dass die in Schritt d) berücksichtigte 2D-Fahrzeugfläche durch zumindest ein Schutzfeld des Flurförderzeugs bestimmt ist.

Insbesondere ist vorgesehen, dass die 2D-Fahrzeugfläche durch eine Summe von Schutzfeldern des Flurförderzeugs bestimmt ist. Beispielsweise ergibt sich diese Summe der Schutzfelder als Summe aus einem in Fahrtrichtung orientierten vorderen Schutzfeld, einem entgegen der Fahrtrichtung am Heck des Flurförderzeugs vorgesehenen rückseitigen Schutzfeld sowie den zu beiden Seiten des Flurförderzeugs vorhandenen seitlichen Schutzfeldern. Alle diese Schutzfelder können auch gemeinsam als ein "Schutzfeld" bezeichnet werden. Das zumindest eine Schutzfeld des Flurförderzeug kann ein statisches oder dynamisches Schutzfeld sein.

Das Verfahren kann beispielsweise dadurch fortgebildet sein, dass das Schutzfeld eine konstante Geometrie hat. Hierbei handelt es sich um ein statisches Schutzfeld.

Gemäß einer alternativen Ausführungsform ist das Verfahren dadurch fortgebildet, dass ein dynamisches Schutzfeld vorgesehen ist. Beispielsweise ist ein Schutzfeldsatz vorhanden, aufweisend eine Vielzahl von (statischen) Schutzfeldern mit jeweils konstanter Geometrie. Für die Fahrt entlang der Route wird in Abhängigkeit von einer Fahrsituation jeweils zumindest ein Schutzfeld aus dem Schutzfeldsatz ausgewählt. Für die Bewegung des Flurförderzeugs entlang der Trajektorie wird, insbesondere in Abhängigkeit von einer Position des Flurförderzeugs auf der Trajektorie zumindest ein Schutzfeld aus dem Schutzfeldsatz ausgewählt, wobei die Auswahl insbesondere in Abhängigkeit von einer Orientierung der Bewegung, eines für die Bewegung angenommenen Lenkwinkels und/oder einer für die Bewegung angenommenen Geschwindigkeit des Flurförderzeugs erfolgt, wobei ferner insbesondere als Geschwindigkeit der Bewegung eine minimale Geschwindigkeit angenommen wird.

Das Schutzfeld ist also in dem Sinne dynamisch, dass eine dynamische Auswahl aus einem Satz von für sich genommen statischen Schutzfeldern erfolgt. Bei den Schutzfeldern handelt es sich beispielsweise um Polygone.

Wie bereits oben erwähnt, kann für die Bewegung des Flurförderzeugs in Schritt d) diese Auswahl in Abhängigkeit von der Geschwindigkeit des Flurförderzeugs erfolgen. Gemäß einer weiteren Ausführungsform ist vorgesehen, dass für diese Auswahl eine minimale Geschwindigkeit des Flurförderzeugs angenommen wird. Durch diese Annahme (minimale vorgesehene Fahrgeschwindigkeit des Flurförderzeugs) wird aus dem vorhandenen Schutzfeldsatz stets das kleinste Schutzfeld ausgewählt, wobei die übrigen Parameter, wie beispielsweise Fahrtrichtung, Fahrtorientierung oder Lenkwinkel durchaus berücksichtigt werden können. Indem die Validierung unter Annahme einer minimalen Fahrgeschwindigkeit erfolgt, kann eine Validierung unter Minimalanforderungen vorgenommen werden.

Mit steigender Geschwindigkeit des Flurförderzeugs werden dessen Schutzfelder ausgedehnt oder es wird aus dem Schutzfeldsatz ein größeres Schutzfeld ausgewählt. Dies geschieht primär, um der Tatsache Rechnung zu tragen, dass der Bremsweg des Flurförderzeugs mit steigender Geschwindigkeit ebenfalls zunimmt.

Es kann gemäß einer weiteren Ausführungsform vorgesehen sein, dass die Schutzfelder auf eine in der Logistikeinrichtung vorgesehene Maximalgeschwindigkeit ausgedehnt werden. Mit anderen Worten kann aus dem Schutzfeldsatz dasjenige Schutzfeld ausgewählt werden, welches bei Maximalgeschwindigkeit des Flurförderzeugs zur Anwendung kommen würde. Die anschließende Validierung des Fahrbereichs kann unter Anwendung dieser Schutzfelddefinition vorgenommen werden. Auf diese Weise kann eine Validierung unter maximal Anforderungen vorgenommen werden. Auch in diesem Fall können die weiteren die Schutzfelder beeinflussenden Parameter, wie beispielsweise die Fahrtrichtung, die Fahrtorientierung oder der Lenkwinkel ebenfalls berücksichtigt werden. Bei einer solchen Validierung kann festgestellt werden, dass das Flurförderzeug in dem gesamten in der Logistikeinrichtung vorgesehenen Fahrbereich auch stets die vorgesehene und gewünschte Höchstgeschwindigkeit erreichen kann. Tritt bei einer solchen Validierung eine Überschneidung zwischen einem Nichtfahrbereich und dem Schutzfeld des Flurförderzeugs auf, kann gegebenenfalls in diesem Abschnitt des Fahrbereichs die Geschwindigkeit reduziert werden, sodass zumindest abschnittsweise wieder kleinere Schutzfelder angenommen werden können.

Im späteren Betrieb wählt das Flurförderzeug seine Geschwindigkeit grundsätzlich selbst, d.h. autonom. Sind die Abstände zwischen den Schutzfeldern und den Nichtfahrbereichen zu gering für die maximale Geschwindigkeit, kann diese automatisch oder durch eine lokal eingeführte Geschwindigkeitsbegrenzung reduziert werden. Die Validierung kann dazu führen, dass feststellt wird, dass Anpassungen beispielsweise am Fahrbereich vorgenommen werden müssen, um die gewünschte Maximalgeschwindigkeit auch tatsächlich zu erreichen. Umgekehrt kann eine Geschwindigkeitsbegrenzung die maximale Geschwindigkeit des Flurförderzeugs in einem Abschnitt, in dem ansonsten eine Überschneidung eines Schutzfeldes mit einem Nichtfahrbereich zu erwarten ist, reduzieren, was dazu führt, dass die Schutzfelder des Flurförderzeugs in dem Abschnitt des Fahrbereichs kleiner sind. Durch die Verkleinerung der Schutzfelder des Flurförderzeugs kann die Überschneidung zwischen den Schutzfeldern des Flurförderzeugs und den Nichtfahrbereichen möglicherweise bereits ausgeräumt werden.

Alternativ oder zusätzlich kann vorgesehen sein, dass die Schutzfeldgröße auch an die jeweilige Fahrsituation angepasst ist. So kann beispielsweise die Geschwindigkeit des Flurförderzeugs bei Kurvenfahrten beschränkt sein. Diese Beschränkung kann vom Kurvenradius abhängen. Vorteilhaft ist die Schutzfeldgröße bei Kurvenfahrten an die maximal erlaubte Geschwindigkeit beim Befahren einer Kurve mit entsprechendem Radius angepasst.

Ferner kann vorgesehen sein, dass je nach Fahrbereich unterschiedliche Maximalgeschwindigkeiten, aus der sich neben dem Lenkwinkel, der Fahrtrichtung und der Fahrorientierung die Schutzfeldgrößen ableiten, vorgegeben sind. So kann beispielsweise eine erste generelle Maximalgeschwindigkeit vorgesehen sein und eine zweite, niedrigere Maximalgeschwindigkeit in Bereichen mit erhöhtem Gefährdungspotential, beispielsweise in Kreuzungsbereichen und/oder im Bereich von Fußgängerüberwegen. Die berücksichtigte Schutzfeldgröße passt sich an der Geschwindigkeit und/oder der Vorgabe in dem entsprechenden Fahrbereich an.

Beim späteren Betrieb des Flurförderzeugs in der Warenlogistikeinrichtung kann sich das Schutzfeld dynamisch verändern. Beispielsweise verändert sich das Schutzfeld in Abhängigkeit von der Fahrtrichtung, der Fahrorientierung, der Geschwindigkeit und dem Lenkwinkel des Flurförderzeugs. Dieses Verhalten des Flurförderzeugs im Realbetrieb kann bei der Validierung des Fahrbereichs bereits berücksichtigt werden. Es ist jedoch nicht vorgesehen dieses Verhalten bei der Validierung durch die Simulation des tatsächlichen Verhaltens des Flurförderzeugs im Betrieb abzubilden. Stattdessen wird basierend auf statischen Eigenschaften der Route und/oder der Warenlogistikeinrichtung wie Kurvenradien, Geschwindigkeitsvorgaben usw. Geschwindigkeit und Lenkwinkel des Flurförderzeugs und damit die entsprechende Schutzfeldausprägung ermittelt.

Die technische Maßnahme, zumindest ein Schutzfeld für die Definition der 2D-Fahrzeugfläche heranzuziehen, hat Vorteile. So ist die Definition, d. h. die Position und Ausdehnung, der Schutzfelder eines Flurförderzeugs in einer Softwareumgebung vielfach gut verfügbar. Mit anderen Worten sind die Position, Geometrie und die Abmessungen der Schutzfelder beispielsweise in Bezug auf einen Koordinatenpunkt des Flurförderzeugs oder auch in Bezug zu einer Grundfläche des Flurförderzeugs technisch gut verfügbar. Die Schutzfelder befinden sich ferner stets in der Peripherie des Flurförderzeugs, sie markieren in diesem Sinne eine maximal von dem Flurförderzeug einschließlich eines Sicherheitsabstands beanspruchte Fläche. Aus diesem Grund hat es sich als praktikable und effiziente Maßnahme herausgestellt, ausschließlich die Schutzfelder des Flurförderzeugs für die Definition der 2D-Fahrzeugfläche heranzuziehen und die Frage einer Überschneidung der von dem Flurförderzeug beanspruchten Fahrfläche mit einem der Nichtfahrbereiche unter Verwendung der Schutzfelder auszuwerten. Für die Berechnung der überstrichenen Fläche können also ausschließlich die Schutzfelder herangezogen werden. Die eigentliche Grundfläche des Flurförderzeugs kann gemäß dieser Ausführungsform außer Betracht bleiben.

Gemäß einer weiteren vorteilhaften Ausführungsform ist vorgesehen, dass das Schutzfeld zusätzlich einen von dem Flurförderzeug transportierbaren Lastträger und/oder eine von dem Flurförderzeug transportierbare Last berücksichtigt. Der Lastträger ist beispielsweise eine Palette, ferner beispielsweise eine Europalette, Industriepalette oder eine Düsseldorfer Halbpalette.

Bei der Last handelt es sich insbesondere um eine auf dem Lastträger transportierbare Last. Wird die Last bei der Definition der Schutzfelder berücksichtigt, wird vorab auf Basis der gewählten Palette die transportierbare Last ausgewählt und insofern berücksichtigt. Dabei werden die vorgeschriebene Lastüberhänge berücksichtigt .

Gemäß einer weiteren Ausführungsform ist ferner vorgesehen, dass die von dem Flurförderzeug in dem 2D-Fahrzeugmodell eingenommene Grundfläche eine durch eine Form und Abmessungen des Flurförderzeugs, projiziert in eine Fahrebene, bestimmte Fläche ist. Beispielweise ist die Fläche ein Polygon. Insbesondere ist diese Fläche ein die Grundfläche des Flurförderzeugs umschließendes kleines Polygon, ein kleinstes Quadrat, ein kleinster Kreis oder eine kleinste konvexe Hülle. Die Modellierung der 2D-Fahrzeugfläche des Flurförderzeugs anhand einer der genannten geometrischen Formen (Polygon, Quadrat, Kreis oder konvexe Hülle) vereinfacht die Berechnung der von dem Flurförderzeug während der Fahrt überstrichenen Fläche.

Gemäß einer weiteren Ausführungsform kann die von dem Flurförderzeug eingenommene 2D-Fahrzeugfläche in Abhängigkeit einer Manövrierfähigkeit des Flurförderzeugs definiert sein. Gleiches gilt insbesondere für eine Position, Geometrie und/oder Abmessungen der Schutzfelder. Die Manövrierfähigkeit des Flurförderzeugs ist beispielsweise durch einen minimalen Wende- oder Lenkradius bestimmt. Auch Überhänge des Aufbaus des Flurförderzeugs, also ein Abstand zwischen einem außenliegenden Punkt, Ort oder einer Außenfläche des Aufbaus des Flurförderzeugs und einer Lenkachse oder Drehachse, können berücksichtigt werden. Diese Überhänge bestimmen, wie weit das Flurförderzeug bei einer Kurvenfahrt ausschert. Allgemein kann bei der Bewegung des Flurförderzeugs, während der die Berechnung der überstrichenen Fläche erfolgt, ein Fahrverhalten des Flurförderzeugs berücksichtigt werden.

Gemäß einer weiteren vorteilhaften Ausführungsform ist der zumindest eine Nichtfahrbereich zumindest teilweise durch ein Infrastrukturelement, beispielsweise ein Gebäudeelement, der Warenlogistikeinrichtung definiert. Bei dem Nichtfahrbereich kann es sich um ein oder mehrere Gebäudeelemente, beispielsweise Wände, der Logistikeinrichtung handeln. Nichtfahrbereiche sind jedoch nicht ausschließlich durch Gebäudeelemente definiert. Es kann sich ebenfalls um Bereiche handeln, die beispielsweise ausschließlich Personen vorbehalten sind, ohne dass eine bauliche Trennung vorgesehen ist.

Gemäß einer weiteren vorteilhaften Ausführungsform ist ferner vorgesehen, dass bestimmt wird, ob zumindest eine Trajektorie für das Flurförderzeug berechnet werden kann, so dass sich eine vollständige Befahrung des Fahrspurengraphs ergibt.

Eine vollständige Befahrung des Fahrspurengraphs deckt alle relevanten Bewegungen des Flurförderzeugs innerhalb der Warenlogistikeinrichtung ab. Die relevanten Bewegungen des Flurförderzeugs sind nicht identisch und in der Regel eine Teilmenge der möglichen Bewegungen des Flurförderzeugs. Die Routen des Flurförderzeugs, die dieses bei der Ausführung von Transportaufträgen nimmt, werden in der Warenlogistikeinrichtung anhand des Fahrspurengraphs technisch umgesetzt. Die Transportaufträge werden beispielsweise in einem übergeordneten Warenwirtschaftssystem erstellt und die Fahrzeuge folgen bei der Ausführung des Transportauftrags dem Fahrspurgengraph. Bewegungen, die von der am Fahrspurengraph orientierten Bewegungen des Flurförderzeugs abweichen sind abhängig von der Konfiguration möglich, für die Durchführung von Transportaufträgen jedoch nicht erforderlich. Beispielsweise ist es nicht erforderlich, dass das Flurförderzeug an jedem Punkt des Fahrbereichs eine vollständige Drehung um die eigene Hochachse durchführen kann. Hierzu können Wendebereiche vorgesehen sein. Beispielsweise können die Wendebereiche größer ausgeführt sein, als Bereiche, in denen sich das Flurförderzeug in Geradeausfahrt befindet. Die Flächennutzung in der Warenlogistikeinrichtung kann optimiert werden.

Gemäß einer Ausführungsform ist das Verfahren dadurch fortgebildet, dass in einem Fall, dass in Schritt e) zumindest eine Überschneidung zwischen der überstrichenen Fläche und dem Nichtfahrbereich festgestellt wird, eine weitere Berechnung einer möglichen Route, insbesondere eine weitere Berechnung einer abschnittsweisen Route in einem Abschnitt des Fahrspurengraphs, in dem die Überschneidung festgestellt wird, durchgeführt wird, wobei für die weitere Berechnung der Trajektorie
alternative vorbestimmte Rechenvorschriften und/oder alternative hinterlegte Trajektorienmodelle auf die in dem Fahrspurengraph vorhandenen statischen Parameter angewandt werden.

Beispielsweise können unter Anwendung der alternativen vorbestimmten Rechenvorschriften alternative Trajektorien zur Befahrung einer Kurve gefunden werden. Es können beispielsweise unterschiedliche Kurvenradien eingesetzt werden, um unterschiedliche Trajektorien zu finden. Unter Ausnutzung der in den Knoten und Kanten vorhandenen Toleranzen können außerdem unterschiedliche Trajektorien gefunden werden, um den entsprechenden Abschnitt des Fahrspurengraphs zu befahren.

Der Fahrspurengraph gibt lediglich die logische Fahrspur an. Flurförderzeuge, die zumindest teilweise für den autonomen Fahrbetrieb eingerichtet sind, berechnen auf der Basis der Information der in den Knoten und Kanten des Fahrspurengraphs vorhandenen Informationen, während des Betriebs die bestmögliche Route. In den Knoten gespeicherte Informationen sind beispielsweise die von dem Knoten akzeptierte Positionsabweichung oder auch ein einzuhaltender Abstand. Der Fahrspurengraph wird beispielsweise von einem Steuerrechner berechnet oder durch den Betreiber der Anlage händisch festgelegt. Die konkrete Trajektorie oder Route wird bestimmt und validiert. Im späteren Betrieb kann die Trajektorie mit dem Steuerrechner abgestimmt werden. So wird der Steuerrechner in die Lage versetzt, beispielsweise zwei Flurförderzeuge aneinander vorbei zu lotsen. Beispielsweise kann der Steuerrechner die Flurförderzeuge dazu bringen, stärker auf dem Fahrspurengraph zu fahren, damit die tatsächliche Trajektorie der Fahrzeuge im Betrieb nicht mehr als nötig von den Knoten und Kanten des Fahrspurengraphs abweicht. Das für den autonomen Fahrbetrieb eingerichtete Flurförderzeug berechnet in diesem Sinne unter Berücksichtigung unter anderem dieser durch die Fahrspurengraph vorgegebenen Regeln die eigene Route selbständig, so dass ein Befahren der geplanten Route mit größtmöglicher Effizienz durchgeführt werden kann. Hierzu gehört es beispielsweise, dass beim Abbiegen kein rechter Winkel mit Drehung auf der Stelle auf einem die zwei Kanten des Fahrspurgraphen verbindenden Knoten abgefahren wird, sondern dass eine Kurvenfahrt im Bereich des Knotens für das Abbiegen erzeugt wird, unter Berücksichtigung der erlaubten Abweichung von dem Knoten während der Fahrt. Dieses Verhalten des Flurförderzeugs, welches auch im realen Fahrbetrieb auftritt, kann bei der Validierung des Fahrbereichs berücksichtigt werden

Es kann zur Annäherung an den späteren realen Fahrbetrieb während der Validierung beispielsweise die vollständige Routenplanungsfunktionalität des Flurförderzeugs auf den zu befahrenden Fahrspurgraph angewendet werden, um die im realen Fahrbetrieb tatsächlich befahrene Route zu testen. Alternativ kann eine weniger aufwändige Annäherung der tatsächlich abzufahrenden Route verwendet werden, bei der ein vereinfachtes Modell des Routenplanungsverhaltens des Flurförderzeugs verwendet wird. In einem vereinfachten Modell kann beispielsweise immer die geringste Geschwindigkeit angenommen werden, da in diesem Betriebsfall die Schutzfelder kleiner sind. Der Fokus kann darauf gelegt werden, generell einen passenden Fahrweg zu finden. Anders als bei einem Betrieb des Flurförderzeugs zur Laufzeit, also während des realen Fahrbetriebs, wird nicht versucht, den optimalen Fahrweg zu finden, sondern lediglich einen möglichen Fahrweg. Dies kann beispielsweise weniger rechenintensiv sein, so dass die Validierung des vollständigen Fahrbereichs in der Logistikeinrichtung in kürzerer Zeit erreichbar ist.

Auf diesem Wege kann eine realitätsnähere Validierung durchgeführt werden, die gegebenenfalls zu einem von der ursprünglichen Validierung abweichenden Ergebnis führt. Da es sich bei der ersten Annäherung oder Validierung um ein vereinfachtes Modell handelt, kann vorgesehen sein, dass die Dimensionen der überstrichenen Fläche hier großzügiger gewählt werden, als bei der sich anschließenden weiteren Validierung,. Eine solche Validierung kann insbesondere abschnittsweise, d. h. in lediglich einem oder mehreren Abschnitten des Fahrbereichs durchgeführt werden, beispielsweise um in kritischen Bereichen ein genaueres Bild der Situation zu erhalten. Erst wenn diese detailliertere Validierung zur Ausgabe einer Warnmitteilung führt, kann die Planung als nicht durchführbar verworfen oder gegebenenfalls geändert werden.

Vorteilhaft ist es in diesem Zusammenhang nicht erforderlich und nicht vorgesehen, eine konkrete Trajektorie zu modellieren. Eine vollständige Modellierung wäre sehr aufwändig und ist aus diesem Grund nicht vorgesehen. Außerdem wäre das Fahrzeug in der später realisierten Warenlogistikeinrichtung bei der Befahrung des Fahrbereichs an entsprechende Fahrzeugfahrstrecken gebunden und somit sehr unflexibel.

Die gemäß dem zuvor genannten Ausführungsbeispiel genannte Lösung ist wesentlich flexibler. Es ist vorteilhaft nicht erforderlich, eine vollständige Modellierung vorzunehmen, sondern es kann der Fahrspurengraph, welcher der späteren Navigation der Flurförderzeuge zugrunde gelegt wird, auch für die Validierung verwendet werden. Die im Betrieb konkret befahrene Trajektorie wird später anhand des festgelegten Fahrspurengraphen vom Flurförderzeug erzeugt.

Schließlich ist es wichtig festzustellen, dass das Verfahren zum Validieren der Fahrbereiche keine Validierung eines konkreten Transportauftrags, sondern eine Validierung einer der späteren Realisierung und dem Betrieb zugrundeliegenden Planung der Warenlogistikeinrichtung betrifft.

Die Aufgabe wird ferner gelöst durch ein computerlesbares Speichermedium, mit darauf gespeicherten Programmcodemitteln, die einen Computer dazu veranlassen, das Verfahren nach einem oder mehreren der zuvor genannten Ausführungsformen durchzuführen.

Auf die Ausführung des Verfahrens treffen gleiche oder ähnliche Vorteile zu, wie sie bereits im Hinblick auf das Verfahren zum Validieren des Fahrbereichs selbst erwähnt wurden.

Ferner wird die Aufgabe gelöst durch ein Verfahren zum Realisieren einer Warenlogistikeinrichtung, die folgenden Schritte umfassend:
a) Erstellen eines 2D-Planungsmodells der Warenlogistikeinrichtung, aufweisend: zumindest einen Fahrbereich, zumindest einen in dem Fahrbereich angeordneten Fahrspurengraph, aufweisend Knoten und diese verbindende Kanten und zumindest einen Nichtfahrbereich, wobei die Knoten und Kanten des Fahrspurengraphs Parameter aufweisen, welche bei der Berechnung einer Route des Flurförderzeugs entlang des Fahrspurengraphs berücksichtigt werden,
b) Bereitstellen eines 2D-Fahrzeugmodells eines für den Betrieb in der Warenlogistikeinrichtung vorgesehenen Flurförderzeugs, wobei das 2D-Fahrzeugmodell eine von dem Flurförderzeug beim Betrieb in der Warenlogistikeinrichtung in Anspruch genommene 2D-Fahrzeugfläche beschreibt
c) Validieren des zumindest einen Fahrbereichs des 2D-Planungsmodells, indem das Verfahren zum Validierung des Fahrbereichs gemäß einer oder mehrerer der zuvor genannten Ausführungsformen an dem 2D-Planungsmodell unter Verwendung des 2D-Fahrzeugmodells durchgeführt wird, wobei
   sofern bei der Validierung in diesem Verfahren in Schritt f) eine Warnmitteilung ausgegeben wird,
d) der zumindest eine Fahrbereich, der zumindest eine Nichtfahrbereich und/oder der Fahrspurengraph in dem 2D-Planungsmodell
   und/oder
   ein für den Betrieb in der Warenlogistikeinrichtung vorgesehenes Flurförderzeug in dem 2D-Fahrzeugmodell geändert wird und
   ein geändertes 2D-Planungsmodell und/oder ein geändertes 2D-Fahrzeugmodell bereitgestellt wird,
e) erneutes Durchführen der Schritte c) bis e) unter Verwendung des geänderten 2D-Planungsmodells und/oder des geänderten 2D-Fahrzeugmodells,
   bis in Schritt f) dieses Verfahrens als Validierungsergebnis keine Warnmitteilung mehr ausgegeben wird,
f) Realisieren der Warenlogistikeinrichtung mit in dem zumindest einen in dem geänderten 2D-Planungsmodell vorhandenen Fahrbereich, Fahrspurengraph und/oder Nichtfahrbereich sowie mit dem in dem geänderten 2D-Fahrzeugmodell beschriebenen Flurförderzeug
   oder
   Realisieren der Warenlogistikeinrichtung mit dem zumindest einen in dem 2D-Planungsmodell vorhandenen Fahrbereich, Fahrspurengraph und/oder Nichtfahrbereich sowie mit dem in dem 2D-Fahrzeugmodell beschriebenen Flurförderzeug, sofern in Schritt c) keine Warnmitteilung ausgegeben wird
   Vorteilhaft kann bei der Realisierung der Warenlogistikeinrichtung auf eine während der Planungsphase im Hinblick auf die Durchführbarkeit von Transportaufträgen optimierte Datenbasis in Form des 2D-Planungsmodells zurückgegriffen werden. Die gewünschte Funktionalität der realisierten Warenlogistikeinrichtung ist somit sichergestellt.

Die Aufgabe wird ferner gelöst durch ein Verfahren zum Betreiben einer Warenlogistikeinrichtung, die folgenden Schritte umfassend:
a) Bereitstellen eines 2D-Betriebsmodells der Warenlogistikeinrichtung, wobei das 2D-Betriebsmodell der Warenlogistikeinrichtung aufweist: zumindest einen in der Warenlogistikeinrichtung vorhandenen Fahrbereich, zumindest einen in dem Fahrbereich angeordneten Fahrspurengraph, aufweisend Knoten und diese verbindende Kanten, und zumindest einen in der Warenlogistikeinrichtung vorhandenen Nichtfahrbereich, wobei die Knoten und Kanten des Fahrspurengraphs Parameter aufweisen, welche bei der Berechnung einer Route des Flurförderzeugs entlang des Fahrspurengraphs im Fahrbetrieb berücksichtigt werden, wobei der Fahrbetrieb in der Warenlogistikeinrichtung unter Verwendung des 2D-Betriebsmodells gesteuert und/oder geregelt wird,
b) Bereitstellen eines 2D-Fahrzeugbetriebsmodells eines in der Warenlogistikeinrichtung betriebenen Flurförderzeugs, wobei das 2D-Fahrzeugbetriebsmodell des Flurförderzeugs eine von dem Flurförderzeug während des Fahrbetriebs in Anspruch genommene Fläche, bezeichnet als 2D-Fahrzeugfläche, beschreibt,
c) Validieren des Fahrbereichs in der Warenlogistikeinrichtung, indem das Verfahren zum Validieren eines Fahrzeugfahrbereichs nach einer oder mehrerer der zuvor genannten Ausführungsformen durchgeführt wird, wobei als 2D-Planungsmodell das 2D-Betriebsmodell der Warenlogistikeinrichtung und als 2D-Fahrzeugmodell das 2D-Fahrzeugbetriebsmodell des Flurförderzeugs verwendet werden,
   - sofern bei der Validierung in Schritt f) dieses Verfahrens als Validierungsergebnis eine Warnmitteilung ausgegeben wird,
d) Verändern des zumindest einen Fahrbereichs, des zumindest einen Nichtfahrbereichs und/oder des Fahrspurengraphs in der Warenlogistikeinrichtung und in dem 2D-Betriebsmodell und/oder
   Verändern des für in der Warenlogistikeinrichtung betriebenen Flurförderzeugs und des zugehörigen 2D-Fahrzeugbetriebsmodells und
   Bereitstellen eines geänderten 2D-Betriebsmodells und/oder eines geänderten 2D-Fahrzeugbetriebsmodells,
e) erneutes Durchführen der Schritte c) bis e) unter Verwendung des geänderten 2D-Betriebsmodells und/oder unter Verwendung des geänderten 2D-Fahrzeugbetriebsmodells, bis
   in Schritt f) dieses Verfahrens als Validierungsergebnis keine Warnmitteilung mehr ausgegeben wird,
f) Betreiben der Warenlogistikeinrichtung mit dem in dem geänderten 2D-Betriebsmodell vorhandenen Fahrbereich, Fahrspurengraph und Nichtfahrbereich sowie mit dem in dem geänderten 2D-Fahrzeugbetriebsmodell beschriebenen geänderten Flurförderzeug
   oder
   Betreiben der Warenlogistikeinrichtung mit dem in dem 2D-Betriebsmodell vorhandenen Fahrbereich, Fahrspurengraph und Nichtfahrbereich sowie mit dem in dem 2D-Fahrzeugbetriebsmodell beschriebenen Flurförderzeug, sofern in Schritt f) dieses Verfahrens keine Warnmitteilung ausgegeben wird.

Vorteilhaft kann der Betrieb der Warenlogistikeinrichtung verbessert werden, da Fahrbereiche, der Fahrspurengraph und Nichtfahrbereiche sowie die verwendeten Flurförderzeuge im Hinblick auf die Durchführbarkeit von Transportaufträgen optimiert werden. Dies verbessert die Effizienz der Warenlogistikeinrichtung.

Die Aufgabe wird ferner gelöst durch eine Warenlogistikeinrichtung, umfassend eine Verarbeitungseinheit und zumindest ein in der Warenlogistikeinrichtung betreibbares Flurförderzeug, wobei in der Verarbeitungseinheit ein 2D-Betriebsmodell der Warenlogistikeinrichtung und ein 2D-Fahrzeugbetriebsmodell des Flurförderzeugs vorhanden sind, wobei
- das 2D-Betriebsmodell der Warenlogistikeinrichtung aufweist: zumindest einen in der Warenlogistikeinrichtung vorhandenen Fahrbereich, zumindest einen in dem Fahrbereich angeordneten Fahrspurengraph, aufweisend Knoten und diese verbindende Kanten, und zumindest einen in der Warenlogistikeinrichtung vorhandenen Nichtfahrbereich, wobei die Verarbeitungseinheit dazu ausgebildet und eingerichtet ist, einen Fahrbetrieb in der Warenlogistikeinrichtung auf der Grundlage des Fahrbereichs, des Fahrspurengraphs und des Nichtfahrbereichs zu steuern und/oder zu regeln, wobei die Verarbeitungseinheit ferner dazu ausgebildet und eingerichtet ist, Parameter, die die Knoten und Kanten des Fahrspurengraphs aufweisen, bei der Berechnung einer Route des Flurförderzeugs entlang des Fahrspurengraphs zu berücksichtigen,
- das 2D-Fahrzeugbetriebsmodel des in der Warenlogistikeinrichtung betreibbaren Flurförderzeugs eine von dem Flurförderzeug im Betrieb in Anspruch genommene Fläche beschreibt, bezeichnet als 2D-Fahrzeugfläche,
   wobei die Verarbeitungseinheit ferner dazu ausgebildet und eingerichtet ist den Fahrbereich zu validieren, indem sie das Verfahren zum Validieren eines Fahrzeugfahrbereichs gemäß einer oder mehrerer der zuvor genannten Ausführungsformen durchführt, wobei als 2D-Planungsmodell das 2D-Fahrzeugbetriebsmodell und als 2D-Fahrzeugmodell das 2D-Fahrzeugbetriebsmodel verwendet werden.

Auf die Warenlogistikeinrichtung treffen gleiche oder ähnliche Vorteile zu, wie sie bereits im Hinblick auf das Verfahren zum Validieren des zumindest einen Fahrbereichs erwähnt wurden, so dass auf Wiederholungen verzichtet werden soll.

Die Warenlogistikeinrichtung ist vorteilhaft dadurch fortgebildet, dass die Verarbeitungseinheit dazu ausgebildet und eingerichtet ist, festzustellen, ob zumindest eine mögliche Route des Flurförderzeugs berechnet werden kann, die eine vollständige Befahrung des Fahrspurengraphs darstellt.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Flurförderzeug in schematisch vereinfachter Draufsicht,
- Fig. 2: eine Detailansicht einer Warenlogistikeinrichtung,
- Fig. 3: ein Ausschnitt des in Fig. 2 gezeigten Details der Warenlogistikeinrichtung, wobei zusätzlich die von dem Flurförderzeug überstrichene Fläche dargestellt ist,
- Fig. 4.: eine weitere Darstellung des aus Fig. 3 bekannten Details der Warenlogistikeinrichtung, wobei neben der von dem Flurförderzeug überstrichenen Fläche auch eine für die Validierung des Fahrbereichs angenommene Trajektorie des Flurförderzeugs dargestellt ist und
- Fig. 5a) bis c): schematische Darstellungen für verschiedene mögliche Trajektorien entlang eines Kurvenabschnitts eines Fahrspurengraphs.

In den Zeichnungen sind jeweils gleiche oder gleichartige Elemente und/oder Teile mit denselben Bezugsziffern versehen, so dass von einer erneuten Vorstellung jeweils abgesehen wird.

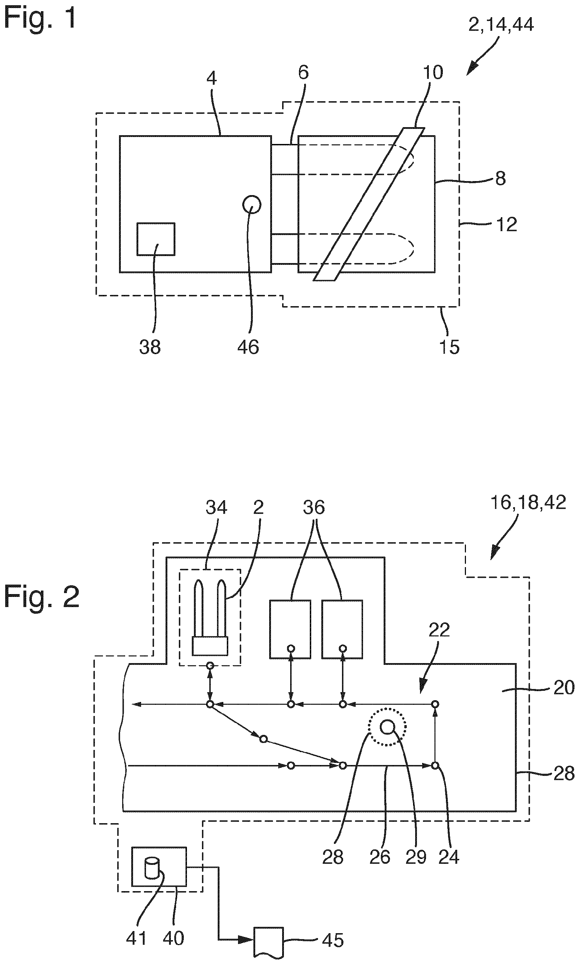

Fig. 1 zeigt ein Flurförderzeug 2 in schematisch vereinfachter Draufsicht. Diese Draufsicht entsteht beispielsweise, indem die Umrisse des Flurförderzeugs 2 in eine Fahrebene, in der das Flurförderzeug 2 bewegt wird, projiziert werden. Neben einem stark vereinfachten Umriss des Chassis 4 und einer Lastgabel 6, ist ein von der Lastgabel 6 aufgenommener Lastträger 8, beispielsweise eine Palette, und eine auf dem Lastträger 8 angeordnete Last 10, schematisch dargestellt.

Ferner ist ein von nicht dargestellten Schutzfeldsensoren, beispielsweise Laserscannern, des Flurförderzeugs 2 aufgespanntes Schutzfeld 12 in gestrichelter Linie dargestellt. Die Darstellung des Schutzfeldes 12 ist schematisch. Beispielsweise ist das Schutzfeld in Fahrtrichtung des Flurförderzeugs 2 tatsächlich größer als auf der gegenüberliegenden Rückseite und an den Seiten des Flurförderzeugs 2. Das Flurförderzeug 2 kann dazu eingerichtet sein, eine Vielzahl von Schutzfeldern 12 aufzuspannen. Beispielsweise umgeben die Schutzfelder 12 das Flurförderzeug 2, den Lastträger 8 und die transportierte Last 10. Auch eine Mehrzahl von Schutzfeldern 12, beispielsweise ein in Fahrtrichtung orientiertes vorderes Schutzfeld 12, ein heckseitig vorhandenes hinteres Schutzfeld 12 sowie seitliche Schutzfelder 12 können gemeinsam als ein Schutzfeld 12 bezeichnet werden. In Fig. 1 ist schematisch eine äußere Grenze des Schutzfeldes 12 dargestellt. Generell ist das Schutzfeld 12 ein Polygon, beispielsweise ein Rechteck, Trapez oder ein andersartig geformtes Polygon. Die Geometrie des Schutzfeldes 12, also seine Form und Größe, sind festgelegt und somit zeitlich nicht veränderlich.

In dem Flurförderzeug 2 kann ein Schutzfeldsatz hinterlegt sein, der eine Vielzahl einzelner Schutzfelder 12 umfasst. Der Schutzfeldsatz ist beispielsweise in einer Fahrzeugsteuerung 38 abgespeichert. Beispielsweise sind in dem Schutzfeldsatz unterschiedlich große vordere Schutzfelder 12 hinterlegt, die in Abhängigkeit von einer Fahrgeschwindigkeit, einer Fahrtrichtung und/oder einer Fahrorientierung des Flurförderzeugs 2 ausgewählt werden. Eine höhere Fahrgeschwindigkeit des Flurförderzeugs 2 erfordert ein größeres Schutzfeld 12 als eine geringe Fahrgeschwindigkeit. Ferner kann der Schutzfeldsatz seitliche Schutzfelder 12 umfassen, die in Abhängigkeit eines Lenkwinkels des Flurförderzeugs 2 ausgewählt werden. Bei Geradeausfahrt kann ein seitliches Schutzfeld 12 kleiner gewählt werden, als bei einer Kurvenfahrt. In einem solchen Fall wird beispielsweise das auf der Kurveninnenseite liegende Schutzfeld 12 größer gewählt als bei Geradeausfahrt. Wird das Flurförderzeug 2 in Rückwärtsfahrt betrieben, kann das heckseitige Schutzfeld 12 größer gewählt werden als bei Vorwärtsfahrt. Die einzelnen Schutzfelder des Schutzfeldsatzes haben wiederum eine konstante Geometrie, d. h. sie sind im Hinblick auf ihre Form und Größe zeitlich konstant. Das Flurförderzeug 2 wählt je nach Geschwindigkeit, Fahrtrichtung, Fahrorientierung und Lenkwinkel genau ein Schutzfeld oder Schutzfeld-Polygon aus und verwendet dieses. In diesem Sinne können die Schutzfelder 12 als dynamisch angesehen werden.

Das Flurförderzeug 2 umfasst ferner einen Sensor 46, bei dem es sich um einen Umfeldsensor, wie beispielsweise einen Laserscanner oder einen LIDAR-Sensor handelt. Mithilfe dieses Sensors 46 ist das Flurförderzeug 2 in der Lage, seine Umgebung zu erfassen. Beispielsweise kann das Flurförderzeug 2 in einer Warenlogistikeinrichtung Hindernisse, wie beispielsweise Paletten oder abgestellte Lasten, oder Infrastrukturelemente, wie beispielsweise Tore, Säulen, Wände oder dergleichen, erfassen.

Die in Fig. 1 gezeigte Darstellung soll nicht nur als Flurförderzeug 2 angesehen werden, sondern ebenso als Darstellung eines 2D-Fahrzeugmodells 14. Eine von dem Flurförderzeug 2 gemäß dem 2D-Fahrzeugmodell 14 eingenommene Fläche, als 2D-Fahrzeugfläche 15 bezeichnet , ist durch den äußeren Rand des Schutzfeldes 12 bestimmt. In dem 2D-Fahrzeugmodell 14 umfasst die 2D-Fahrzeugfläche 15 beispielhaft die Grundfläche des Flurförderzeugs 2, entsprechend der Projektion seines Umrisses in die Transportebene, zuzüglich der Schutzfelder 12.

Die Darstellung in Fig. 2 dient ferner als Illustration eines 2D-Fahrzeugbetriebsmodells 44. Ähnlich dem 2D-Fahrzeugmodell 14 ist wiederum die 2D-Fahrzeugfläche 15 durch einen äußeren Rand des Schutzfeldes 12 bestimmt. Auf das 2D-Fahrzeugmodell 14 und das 2D-Fahrzeugbetriebsmodell 44 wird zu späterem Zeitpunkt detailliert eingegangen.

Fig. 2 zeigt eine Detailansicht eines Teils einer Warenlogistikeinrichtung 16. Die Darstellung kann ebenso eine Detailansicht eines 2D-Planungsmodells 18 oder eine Detailansicht eines 2D-Betriebsmodells 42 der Warenlogistikeinrichtung 16 sein. Auf das 2D-Planungsmodell 18 und das 2D-Betriebsmodell 42 wird zu späterem Zeitpunkt detailliert eingegangen.

In der Warenlogistikeinrichtung 16 ist ein Fahrbereich 20 vorgesehen. In dem Fahrbereich 20 werden Flurförderzeuge 2, beispielsweise für den autonomen Fahrbetrieb eingerichtete Flurförderzeuge 2, betrieben. Die Warenlogistikeinrichtung 16 umfasst zu diesem Zweck zumindest ein Flurförderzeug 2. Ferner umfasst die Warenlogistikeinrichtung 16 eine Verarbeitungseinheit 40. Die Verarbeitungseinheit 40 ist beispielsweise ein Computer, Server oder eine Workstation. Die Verarbeitungseinheit 40 kann ebenso als Cloudservice implementiert sein. Im letzteren Fall befindet sich die Verarbeitungseinheit 40 abweichend von der Darstellung in Fig. 2 nicht innerhalb der Warenlogistikeinrichtung 16. Die Verarbeitungseinheit 40 ist ferner dazu ausgebildet und eingerichtet, mit zumindest einer weiteren Verarbeitungseinheit zu kommunizieren. Bei dieser weiteren Verarbeitungseinheit handelt es sich beispielsweise um einen Computer eines Betreibers, Herstellers oder Servicedienstleisters der Warenlogistikeinrichtung 16. Die Verarbeitungseinheit 40 kann ebenso dazu ausgebildet und eingerichtet sein, mit einer Verarbeitungseinheit, beispielsweise einem Computer oder einem Cloudservice, eines Herstellers der in der Warenlogistikeinrichtung 16 betriebenen Flurförderzeuge 2 zu kommunizieren.

In der Warenlogistikeinrichtung 16 ist ein Fahrbereich 20 vorhanden, in welchem ein Fahrspurengraph 22, umfassend Knoten 24 und Kanten 26, von denen aus Gründen der Übersichtlichkeit lediglich einige mit Bezugszeichen versehen sind, vorhanden ist. Ferner ist ein Nichtfahrbereich 28 vorgesehen, welcher im dargestellten Ausführungsbeispiel den Fahrbereich 20 umschließt. Die äußere Grenze des Nichtfahrbereichs 28 ist beispielhaft durch ein oder mehrere Gebäudeelement(e), beispielsweise eine Wand oder Durchfahrt der Warenlogistikeinrichtung 16 festgelegt. Innerhalb des Fahrbereichs 20 ist eine Säule als beispielhaftes Infrastrukturelement 29 angeordnet. Weitere Infrastrukturelemente 29 wären beispielsweise Durchfahrten oder Tore, oder auch innerhalb der Warenlogistikeinrichtung 16 vorhandene Förderzeuge, wie beispielsweise Förderbänder oder Regalbediengeräte. Beispielhaft ist um das Infrastrukturelement 29 herum ein weiterer Nichtfahrbereich 28 angeordnet, der mit punktierter Linie dargestellt ist.

In der Warenlogistikeinrichtung 16 sind ferner beispielhaft eine Parkposition 34 und zwei Palettenplätze 36 vorgesehen. Während des Betriebs des Flurförderzeugs 2 in der Warenlogistikeinrichtung 16 erhält dieses, beispielsweise von der Verarbeitungseinheit 40, Transportaufträge zugeteilt. Ein solcher Transportauftrag kann beispielsweise darin bestehen, eine Last 10 von einem Startpunkt, beispielsweise einem Bodenstellplatz, zu einem der Palettenplätze 36 als Ziel zu transportieren, und die Last 10 gemeinsam mit dem Lastträger 8 dort abzustellen. Zur Erfüllung dieses Transportauftrags stehen dem Flurförderzeug in der Regel mehrere mögliche Routen innerhalb der Warenlogistikeinrichtung 16 zur Verfügung. Diese ermittelt das Flurförderzeug 2 gemeinsam mit der Verarbeitungseinheit 40.

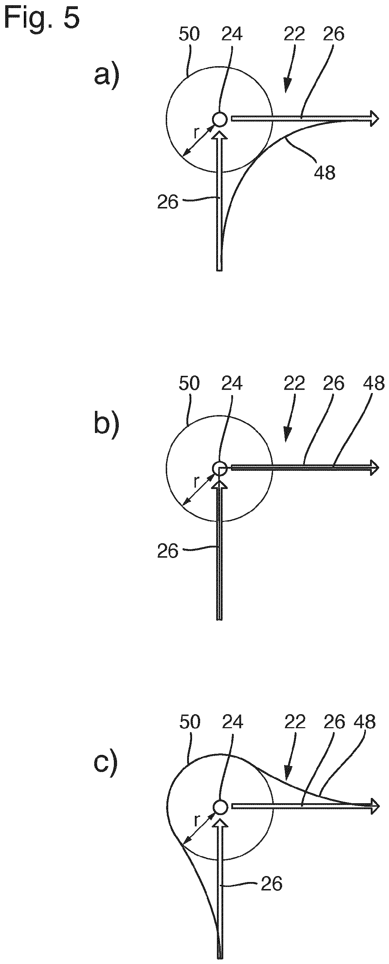

Zur Erfüllung des Transportauftrags wird anschließend eine der Routen ausgewählt. Das Flurförderzeug 2 fährt die Route ab, indem es sich entlang einer Trajektorie bewegt. In diesem Zusammenhang kann die Route von einer oder auch mehreren Trajektorien beschrieben sein. Mit anderen Worten kann eine Trajektorie die abzufahrende Route lediglich abschnittsweise beschreiben. Für die Berechnung der konkreten Trajektorie werden die in dem Fahrspurengraph 22, konkret in dessen Knoten 24 und Kanten 26, vorhandenen Informationen oder Parameter berücksichtigt. Eine Information, die einem Knoten 24 zugeordnet sein kann, ist beispielsweise ein Radius, der einen Kreis definiert, innerhalb dessen der Knoten 24 überfahren werden kann. In einer Kante 26 kann beispielsweise die Fahrtrichtung hinterlegt sein, wie in Fig. 2 mit Pfeilen schematisch angedeutet. Weitere diesbezügliche Einzelheiten werden im Zusammenhang mit den Fig. 5a) bis 5c) erläutert.

Der in der Warenlogistikeinrichtung 16 vorhandene Fahrbereich 20 kann validiert werden. Handelt es sich bei der Darstellung in Fig. 2 um ein 2D-Planungsmodell 18 der Warenlogistikeinrichtung 16, kann der in dieser Planung vorhandene Fahrbereich 20 validiert werden. Handelt es sich bei der Darstellung in Fig. 2 um ein 2D-Betriebsmodell 42 einer Warenlogistikeinrichtung 16, kann auch in diesem Betriebsmodell der Fahrbereich 20 validiert werden. Das 2D-Betriebsmodell 42 wird beispielsweise von der Verarbeitungseinheit 40 verwendet, um einen Betrieb der in der Warenlogistikeinrichtung 16 vorhandenen Flurförderzeuge 2 zu steuern und/oder zu regeln, wobei das 2D-Betriebsmodell zur Steuerung und/oder Regelung des Fahrbetriebs in der Warenlogistikeinrichtung 16 herangezogen wird, die Steuerung und/oder Regelung jedoch nicht ausschließlich auf dessen Grundlage erfolgt. Die Validierung des Fahrbereichs 20 erfolgt jeweils in gleicher oder ähnlicher Weise. Sie wird im Folgenden beispielhaft für das 2D-Planungsmodell 18 erläutert.

Die Validierung findet beispielsweise unter Verwendung der Verarbeitungseinheit 40 der Warenlogistikeinrichtung 16 statt. Die Validierung kann ebenso auf einer beliebigen weiteren Verarbeitungseinheit, insbesondere auf einer Verarbeitungseinheit außerhalb der Warenlogistikeinrichtung 16, erfolgen. Die zu diesem Zweck eingesetzten Verarbeitungseinheiten 40 sind beispielsweise Computer, Workstations oder auch Cloudservices.

Der Fahrbereich 20 in dem 2D-Fahrzeugmodell 18 der Warenlogistikeinrichtung 16 kann mit dem Ziel validiert werden, festzustellen, ob die Warenlogistikeinrichtung 16 einschließlich des vorgesehenen Fahrbereichs 20 und auch des darin vorhandenen Fahrspurengraphs 22 in der geplanten Form mit großer Wahrscheinlichkeit erfolgreich realisiert werden kann oder nicht, mit anderen Worten, ob ein Flurförderzeug prinzipiell den Fahrspurgraphen 22 befahren kann oder nicht. Das Ergebnis der Validierung ist in der Regel eine grafische Darstellung der Warenlogistikeinrichtung 16 einschließlich des vorgesehenen Fahrbereichs 20, des Fahrspurengraphs 22 und einer von dem 2D Fahrzeugmodell 14 des Flurförderzeugs 2 während einer Bewegung entlang des Fahrspurengraphs 22 überstrichenen Fläche 30. Es werden insbesondere Überschneidungen zwischen einem Nichtfahrbereich 28 und der überstrichenen Fläche grafisch dargestellt. Ferner kann als Ergebnis der Validierung ausgegeben werden, ob in der Warenlogistikeinrichtung 16 unter Verwendung des validierten Fahrbereichs 20 und des Fahrspurengraphs 22 Transportaufträge erfolgreich durchgeführt werden können, oder dass das 2D-Planungsmodell 18 der Warenlogistikeinrichtung 16 geändert werden muss, da zu befürchten ist, dass bei der Durchführung eines Transportauftrags durch das Flurförderzeug 2 ein Nichtfahrbereich 28 verletzt würde. Selbstverständlich beachtet ein Flurförderzeug 2 im Realbetrieb die Nichtfahrbereiche 28 in jedem Fall. Die beschriebene Situation würde vielmehr dazu führen, dass ein angefragter Transportauftrag verweigert und somit nicht durchgeführt würde. Es kann im Rahmen der Validierung ebenso festgestellt werden, dass das Flurförderzeug 2 unter der Berücksichtigung der geforderten Abstände zum Nichtfahrbereich 28, keinen Weg findet, um den Transportauftrag zu erfüllen. Eine Überschneidung zwischen einem Schutzfeld 12 und einem Nichtfahrbereich 28 ist grundsätzlich unerwünscht, da im Realbetrieb eine Schutzfeldverletzung des Flurförderzeugs 2 hervorgerufen werden kann. Bei einer Schutzfeldverletzung reagiert das Flurförderzeug 2 mit einem sofortigen Stopp seiner Fahrt. Es muss sich jedoch nicht zwingend um eine Schutzfeldverletzung handeln. Wenn der Nichtfahrbereich 28 nicht baulich abgegrenzt ist, würde die beschriebene Überschneidung zwischen dem Schutzfeld 12 und dem Nichtfahrbereich 28 nicht zu einem "Sensor-Stopp" des Flurförderzeugs 2 führen. Das Flurförderzeug 2 würde hingegen für den gestellten Transportauftrag initial bereits keine Trajektorie finden und im konkreten Anwendungsfalls nicht starten. Findet eine Schutzfeldverletzung statt, ist eine Weiterfahrt des Flurförderzeugs 2 nur möglich, wenn die Steuerung des Flurförderzeugs 2 von einem Menschen übernommen wird oder wenn die Schutzfeldverletzung von selbst verschwindet, beispielsweise weil ein temporäres Hindernis, zum Beispiel eine Person, sich bewegt und die Schutzfeldverletzung aufhebt. Ein solcher Nothalt des Flurförderzeugs 2 infolge einer Schutzfeldverletzung führt in den allermeisten Fällen zu einer Störung des Betriebsablaufs in der Warenlogistikeinrichtung 16.

Bei einem Verfahren zur Validierung des Fahrbereichs 20 wird zunächst das 2D-Planungsmodell 18 der Warenlogistikeinrichtung 16 bereitgestellt. Wie bereits erwähnt, umfasst dieses 2D-Planungsmodell 18 zumindest einen Fahrbereich 20, zumindest einen in dem Fahrbereich 20 angeordneten Fahrspurengraph 22 und zumindest einen Nichtfahrbereich 28. In dem Fahrspurengraph 22 sind statische Parameter vorhanden, welche bei der Berechnung einer Trajektorie 48 des Flurförderzeugs 2 entlang des Fahrspurengraphs 22 berücksichtigt werden. Bei diesen Parametern handelt es sich beispielsweise um Fahrtrichtung und/oder Abstände, mit denen die Kanten 26 des Fahrspurengraphs 22 befahren werden. In den Knoten 24 des Fahrspurengraphs 22 sind beispielsweise Parameter hinterlegt, mit denen ein solcher Knoten 24 überfahren wird, beispielsweise beim Befahren des Knotens 24 in einer Kurve. Neben dem 2D-Planungsmodell 18 wird ein 2D-Fahrzeugmodell 14 eines Flurförderzeugs 2, für dessen Betrieb in der Warenlogistikeinrichtung 16 der Fahrbereich 20 validiert werden soll, bereitgestellt. Die Darstellung in Fig. 1 kann ein 2D-Fahrzeugmodell 14 sein. Das 2D-Fahrzeugmodell 14 umfasst eine von dem Flurförderzeug 2 beim Betrieb in der Warenlogistikeinrichtung 16 eingenommene Fläche bzw. beschreibt die Form und Ausdehnung dieser Fläche. In Fig. 1 ist die von dem Flurförderzeug 2 eingenommene Fläche, also die 2D-Fahrzeugfläche 15, durch die äußere Grenze des Schutzfeldes 12 definiert.

Zur Validierung des Fahrbereichs 20 in dem 2D-Planungsmodell 18 wird eine von dem Flurförderzeug 2 in dem 2D-Planungsmodell 18 überstrichene Fläche bestimmt. Zu diesem Zweck wird zunächst eine Trajektorie 48 des Flurförderzeugs 2 entlang zumindest eines Abschnitts des Fahrspurengraphs 22 bestimmt. Die Bestimmung der Trajektorie 48 erfolgt insbesondere ausschließlich auf der Grundlage der in dem Fahrspurengraph 22 vorhandenen statischen Parameter. Anschließend wird das 2D-Fahrzeugmodell 14 entlang der Trajektorie 48 bewegt. Diese Bewegung des 2D-Fahrzeugmodells 14, die nicht mit einer realen Fahrt des Flurförderzeugs 2 zu verwechseln ist, erfolgt beispielsweise indem eine Position und Orientierung des 2D-Fahrzeugmodells auf der Trajektorie 48 in einer vorbestimmten oder vorbestimmbaren Schrittweite berechnet wird. Es wird anschließend die bei dieser Bewegung des 2D-Fahrzeugmodells 14 entlang der Trajektorie 48 von dem 2D-Fahrzeugmodell 14 überstrichene Fläche 30 berechnet. Die überstrichene Fläche ist derjenigen Fläche ähnlich, die das Flurförderzeug 2 im Realbetrieb einnimmt, wenn es eine Route entlang des entsprechenden Teils des Fahrspurengraphs 22 in dem Fahrbereich 20 abfährt.

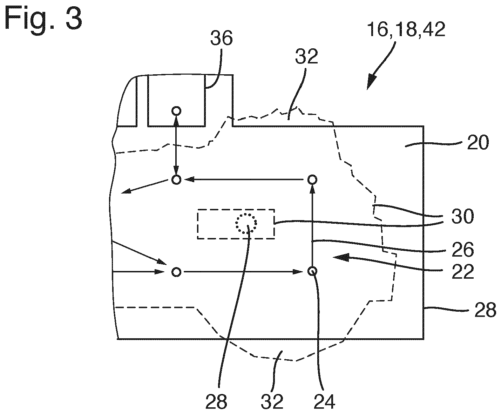

Fig. 3 zeigt einen Ausschnitt des in Fig. 2 gezeigten Details der Warenlogistikeinrichtung 16, des 2D-Planungsmodells 18 oder des 2D-Betriebsmodells 42. Neben den bereits im Zusammenhang mit Fig. 2 erläuterten Elementen ist zusätzlich ein äußerer Rand der überstrichenen Fläche 30 mit gestrichelter Linie dargestellt. Die überstrichene Fläche 30 wird bestimmt, indem zunächst bestimmt wird, ob zumindest eine mögliche Trajektorie 48 für das Flurförderzeug 2 entlang des Fahrspurengraphs 22 gefunden werden kann. Beim Auffinden dieser möglichen Trajektorie 48 werden zunächst ausschließlich die in den Knoten 24 und Kanten 26 des Fahrspurengraphs 22 vorhandenen Parameter berücksichtigt.

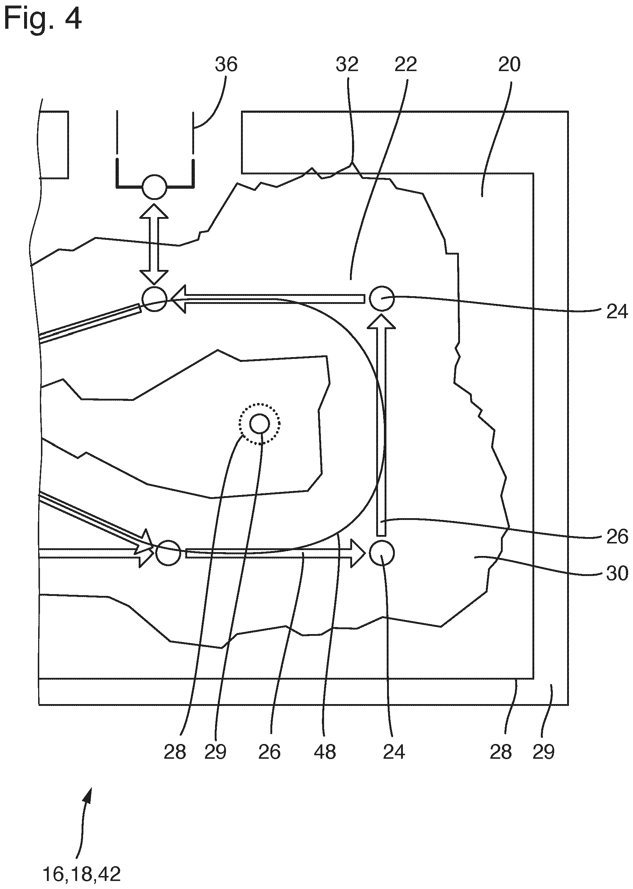

Fig. 4 zeigt eine weitere Darstellung des aus Fig. 3 bekannten Details der Warenlogistikeinrichtung 16, des 2D-Planungsmodells 18 oder des 2D-Betriebsmodells 42, wobei neben der von dem Flurförderzeug 2 überstrichenen Fläche 30 auch die für die Validierung des Fahrbereichs 20 gefundene Trajektorie 48 des Flurförderzeugs 2 dargestellt ist. Während der Bewegung des Flurförderzeugs 2 entlang dieser Trajektorie 48 wird diejenige Fläche bestimmt, die die 2D-Fahrzeugfläche 15 überstreicht. Beispielsweise ist dies die Fläche, die ein Schutzfeld 12 des Flurförderzeugs 2 während der Bewegung entlang der Trajektorie 48 überstreicht. Diese Fläche wird als überstrichene Fläche 30 bezeichnet, deren Rand in Fig. 4 dargestellt ist. Zum Zweck der Validierung des Fahrbereichs 20 kann das Schutzfeld 12 des Flurförderzeugs 2, welches beispielsweise die 2D-Fahrzeugfläche 15 festlegt, als zeitlich konstant angenommen werden. Hierzu kann aus dem Schutzfeldsatz des Flurförderzeugs 2 beispielsweise dasjenige Schutzfeld 12 ausgewählt werden, welches bei minimaler Geschwindigkeit des Flurförderzeugs 2 zur Anwendung kommt. Es kann ebenso vorgesehen sein, die Form und Ausdehnung des Schutzfeldes 12 in regelmäßigen Abständen an die Fahrsituationen des Flurförderzeugs 2 anzupassen, beispielsweise an dessen Geschwindigkeit Lenkwinkel, etc.

Die Fig. 5a) bis c) zeigen schematische Darstellungen für verschiedene mögliche alternative Trajektorien 48 entlang eines Kurvenabschnitts eines Fahrspurengraphs 22, wie sie auch im tatsächlichen Betrieb zum Einsatz kommen können. Die Figuren illustrieren beispielhaft, wie die in den Knoten 24 und Kanten 26 vorhandenen Parameter bei der Berechnung der möglichen Trajektorien 48 berücksichtigt werden. Der dargestellte Knoten 24 umfasst beispielhaft als Parameter den Radius r, der einen Umkreis 50 um den Knoten 24 definiert. Eine weitere Bedingung ist, dass die Trajektorie 48 des Flurförderzeugs 2 während der Kurvenfahrt den Umkreis 50 schneidet oder zumindest tangiert. In den dargestellten Kanten 26 ist eine Fahrtrichtung, die durch eine Pfeilspitze angedeutet ist, als Parameter enthalten. Während der Validierung des Fahrbereichs 20 wird die Bewegung des Flurförderzeugs 2 wie folgt angenommen. Das Flurförderzeug 2 fährt jeweils von der unteren Kante 28 her auf den Knoten 24 zu. In Fig. 5a) wählt das Flurförderzeug 2 eine Trajektorie 48, die ausgehend von der vertikal liegenden Kante 26 den Umkreis 50 tangiert und in einem Bogen auf die horizontal liegende Kante 26 einbiegt. In Fig. 5b) wählt das Flurförderzeug 2 eine Trajektorie 48, bei der dieses der vertikalen Kante 26 bis zum Knoten 24 folgt, auf dem Knoten 24 auf der Stelle dreht und anschließend der horizontal verlaufenden Kante 26 folgt. In Fig. 5c) wählt das Flurförderzeug 2 eine Trajektorie 48, bei der dieses wiederum ausgehend von der vertikal verlaufenden Kante 26 auf einen Außenumfang des Umkreises 50 einbiegt, den Außenumfang des Umkreis 50 folgt und von diesem ausgehend auf die horizontal liegende Kante 26 einbiegt.

Im Rahmen der Validierung können die drei beispielhaft gezeigten Varianten für eine Trajektorie 48 berechnet werden, mit dem Ziel eine Trajektorie 48 zu finden, entlang der der Fahrspurengraph 22 befahren werden kann. Eine Variante wird initial der Berechnung zugrunde gelegt, die beiden weiteren Varianten können als Alternativen dienen, falls sich die initial verwendete Variante als nicht befahrbar herausstellt. Die genannten Alternativen können ebenfalls als statische Alternativen für die Befahrung des entsprechenden Abschnitts des Fahrspurengraphs 22, also hier beispielhaft einer Fahrsituation: 90°-Abbiegung, zur Verfügung gestellt werden.

Bei der Suche nach einer möglichen Trajektorie 48 entlang des Fahrspurengraphs 22 wird beispielsweise ein Startpunkt und das zu erreichende Ziel ausgewählt und vom Startpunkt zum Ziel ein Weg entlang des Fahrspurengraphs gesucht. Zu diesem Zeitpunkt können auch bereits weitere Informationen berücksichtigt werden, beispielsweise statische Fahrzeugparameter, wie beispielsweise eine Fahrzeugbreite oder mögliche Kurvenradien . Bereits bei der Bestimmung der Trajektorie 48 kann somit berücksichtigt werden, ob diese grundsätzlich von dem entsprechenden Fahrzeug befahrbar ist, oder nicht. Stehen mehrere Varianten der Trajektorie 48 zur Verfügung, kann diejenige Variante ausgewählt werden, bei der es entweder zu keiner Überschneidung oder nur zu einer minimalen Überschneidung zwischen der überstrichenen Fläche 30 und dem Nichtfahrbereich 28 kommt. In dieser Weise kann initial bereits eine Trajektorie 48 entlang des Fahrspurengraphs 22 gesucht werden, bei der nach Möglichkeit Überschneidungen 32 vermieden werden. Es wird als Minimalanforderung für die Validierung eine einzige mögliche Trajektorie 48 zur Befahrung des Fahrspurengraphs 22 gesucht. Anhand dieser Trajektorie 48 wird die anschließende Analyse, beispielsweise durch grafische Anzeige der überstrichenen Fläche 30 und der Nichtfahrbereiche 28, durchgeführt.

Eine solche Trajektorie 48 ist in Fig. 4 gezeigt, wobei die Figur eine beispielhafte abschnittsweise grafische Ausgabe darstellt. Insbesondere ist vorgesehen, dass eine grafische Ausgabe erfolgt, in der der komplette Fahrspurengraph 22 dargestellt ist.

Es wird nun überprüft, ob eine Überschneidung 32 zwischen der überstrichenen Fläche 30 und dem Nichtfahrbereich 28 vorliegt. Bei den in Fig. 3 und 4 dargestellten Ausführungsbeispielen ist jeweils eine solche Überschneidung 32 vorhanden. In Fig. 3 liegt eine Überschneidung 32 im oberen und unteren waagerechten Bereich des Nichtfahrbereichs 28 vor, in Fig. 4 nur im oberen Bereich des Nichtfahrbereichs 28. Es sind diejenigen Bereiche, in denen die überstrichene Fläche 30 über den Nichtfahrbereich 28 hinausragt.

Würde das Flurförderzeug 2 im Realbetrieb den geplanten Fahrspurengraph 22 in der ebenfalls geplanten Warenlogistikeinrichtung 16 befahren, könnte in den in Fig. 3 und 4 gezeigten Überschneidungsbereichen 32 ein Schutzfeld 12 des Flurförderzeugs 2 ausgelöst werden, was zu einem Nothalt des Flurförderzeugs 2 führen würde. Der noch wahrscheinlichere Fall ist, dass das Flurförderzeug 2 initial eine Route, die entlang einer solchen Trajektorie 48 abgefahren werden soll, als nicht befahrbar einstufen würde, und dementsprechend die Ausführung eines Transportauftrags entlang dieser Route verweigern würde.

Wird also eine Überschneidung 32 festgestellt, kann eine Warnmitteilung 45 ausgegeben werden. Ein weiterer Fall, in dem ebenfalls eine Warnmitteilung 45 ausgegeben werden kann, ist derjenige, bei dem keine mögliche Trajektorie 48 zur Befahrung des Fahrspurengraphs 22 gefunden werden kann

Neben dem Fahrspurengraph 22 können im Hinblick auf die Befahrbarkeit des Fahrbereichs 20 in der Warenlogistikeinrichtung 16 noch weitere in der Warenlogistikeinrichtung 16 vorhandene Elemente berücksichtigt werden. Die Warenlogistikeinrichtung 16 umfasst beispielhaft eine Parkposition 34, in der das Flurförderzeug 2 in Fig. 2 parkend dargestellt ist. Ferner umfasst die Warenlogistikeinrichtung 16 beispielhaft zwei Palettenplätze 36. Der Fahrspurengraph 22 umfasst, wie bereits erwähnt, Knoten 24 und Kanten 26, wobei die Kanten 26 jeweils mit einer Richtungsangabe, angedeutet durch Pfeile, versehen sind. Ausgehend von den Knoten 24 können eine oder mehrere Kanten 26 abzweigend vorgesehen sein bzw. zu diesem Knoten 24 hinführen. Der Fahrspurengraph 22 kann also mehrere alternative Fahrtrouten oder Trajektorien 48 ermöglichen. Der Fahrspurengraph 22 erreicht auch den in Fig. 3 dargestellten Palettenplatz 36 Wird der Palettenplatz 36 bei der Validierung berücksichtigt, ist zu beachten, dass bei der Anfahrt des Palettenplatzes 36 die Schutzfelder 12 des Flurförderzeugs 2 typischerweise abgeschaltet werden, da die Palette als Lastträger 8 anderenfalls nicht aufgenommen werden kann. Die überstrichene Fläche 30 wäre bei Berücksichtigung der Palettenanfahrt beispielsweise ausschließlich durch die Grundfläche des Flurförderzeugs 2 gegeben. So kann sichergestellt werden, dass eine Anfahrt zur Palettenaufnahme grundsätzlich möglich ist. In gleicher Weise kann auch die Parkposition 34 validiert werden.

Wird eine Überschneidung 32 zwischen der überstrichenen Fläche 30 und dem Nichtfahrbereich 28 festgestellt, kann alternativ zu einer Änderung des 2D-Planungsmodells 18 und/oder des 2D-Fahrzeugmodells 14 die Validierung verfeinert werden. Zu diesem Zweck kann eine weitere Berechnung einer zumindest abschnittsweisen Trajektorie 48 in einem Abschnitt des Fahrspurengraphs 22 vorgenommen werden. Es kann derjenige Abschnitt des Fahrspurengraphs 22 genauer betrachtet werden, in dem zuvor die Überschneidung 32 festgestellt wurde. Zu diesem Zweck können alternative vorbestimmte Rechenvorschriften und oder alternative hinterlegte Trajektorienmodelle auf die in dem Fahrspurengraph vorhandenen statischen Parameter angewandt werden, um zunächst eine alternative Trajektorie zu ermitteln. Beispielsweise könnte, wenn eine 90°-Kurve nicht wie in Fig. 5a befahrbar ist alternativ eine Befahrung entsprechend der Fig. 5b oder 5c ausprobiert werden. Ferner könnten die in dem Fahrspurengraph 22, konkret in den Knoten 24 und Kanten 26, vorhandenen möglichen Abweichungen ausgereizt werden, um alternative Trajektorien 48 oder Trajektorienabschnitte zu finden. Die Berücksichtigung unterschiedlicher Abweichungen im Rahmen der maximal vorgegebenen Abweichungen sind beispielsweise alternative vorbestimmte Rechenvorschriften.

Unter Berücksichtigung der auf diese Weise erhaltenen zusätzlichen Informationen kann die Trajektorie 48 zumindest abschnittsweise neu berechnet und somit geändert werden. Es ergibt sich ggf. eine alternative Trajektorie 48, welche von der zuvor berechneten Trajektorie 48, die ausschließlich auf der Grundlage der Parameter der Knoten 24 und Kanten 26 bestimmt wurde, abweicht. Diese neue Trajektorie 48 führt ggf. zu einem anderen Ergebnis. Im Idealfall wird keine Überschneidung 32 zwischen der überstrichenen Fläche 30 und dem Nichtfahrbereich 28 mehr festgestellt.

Das zuvor beschriebene Verfahren zum Validieren des zumindest einen Fahrbereichs 20 in dem 2D-Planungsmodell 18 ist beispielsweise in Form von Programmcodemitteln auf einem computerlesbaren Speichermedium 41 gespeichert und kann auf der Verarbeitungseinheit 40 der Warenlogistikeinrichtung 16, bei der es sich beispielsweise um einen Computer handelt, durchgeführt werden.

Gemäß einem weiteren Ausführungsbeispiel ist ein Verfahren zum Realisieren einer Warenlogistikeinrichtung 16 vorgesehen. Gemäß einem solchen Verfahren wird zunächst ein 2D-Planungsmodell 18, wie es beispielsweise in den Fig. 2 und 3 gezeigt ist, erstellt. Außerdem wird ein 2D-Fahrzeugmodell 14, wie es bereits im Zusammenhang mit Fig. 1 erläutert wurde, erstellt. Anschließend erfolgt eine Validierung des 2D-Planungsmodells 18, indem das Verfahren zur Validierung gemäß einem oder mehreren der zuvor genannten Ausführungsbeispiele an dem 2D-Planungsmodell 18 unter Verwendung des 2D-Fahrzeugmodells 14 durchgeführt wird.

Wird bei dieser Validierung eine Warnmitteilung ausgegeben, kann dies verschiedene Konsequenzen haben. Zum einen ist es möglich, in dem 2D-Planungsmodell 18 den Fahrbereich 20, den Nichtfahrbereich 28 und/oder den Fahrspurengraph 22 zu ändern. Eine weitere Möglichkeit besteht darin das 2D Fahrzeugmodell 14 zu ändern. Dies bedeutet, dass in der Warenlogistikeinrichtung 16 andere Flurförderzeuge 2 vorgesehen werden. Eine Änderung des Flurförderzeugs 2 führt in der Regel auch dazu, dass andere Lastträger 8 vorgesehen werden müssen, also beispielsweise nur noch Lasten 10 mit geringeren Abmessungen transportiert werden können. Es kann als Ergebnis ebenso festgestellt werden, dass die Warenlogistikeinrichtung 16 unter den gegebenen Randbedingungen nicht realisiert werden kann.

Eine Veränderung des Nichtfahrbereichs 28 kann beispielsweise durch eine Veränderung der Planung der Warenlogistikeinrichtung 16 vorgenommen werden. Zusätzlich kann das für den Betrieb in der Warenlogistikeinrichtung 16 vorgesehene Flurförderzeug 2 und das zugehörige 2D-Fahrzeugmodell 14 geändert werden. Es können ferner beispielsweise abschnittsweise Geschwindigkeitsbegrenzungen für den Betrieb des Flurförderzeugs 2 in dem Fahrbereich 20 vorgesehen werden. Das Flurförderzeug 2 wählt zur Laufzeit seine Geschwindigkeit automatisch. Es kann dieser auf ein Minimum reduzieren, sofern mit der maximalen Geschwindigkeit kein Fahrweg gefunden werden kann. Um den entsprechenden Abschnitt des Fahrspurengraphs 22 zu befahren, würde das Flurförderzeug 2 also eine geringere, als die maximal mögliche Geschwindigkeit wählen, was einer Geschwindigkeitsbegrenzung gleichkommt. Dies senkt jedoch die maximale Umschlagsleistung in der Warenlogistikeinrichtung 16. Durch die reduzierten Geschwindigkeiten ergibt sich eine Verkleinerung der Schutzfelder 12, wodurch ggf. eine Überschneidung 32 zwischen der überstrichenen Fläche 30 und im Nichtfahrbereich 28 vermieden werden kann. Zur Vermeidung von Überschneidungen 32 kann ebenso der Fahrspurengraph 22 geändert werden. Am Schluss dieser Anpassung wird ein geändertes 2D-Planungsmodell 18 und/oder ein geändertes 2D-Fahrzeugmodell 14 bereitgestellt. Mit diesen beiden Modellen kann erneut die Validierung des 2D-Planungsmodells 18 durchgeführt werden.

Die Schritte der Validierung und der Änderung bzw. Anpassung des 2D-Planungsmodells 18 und/oder des 2D-Fahrzeugmodells 14 können iterativ so lange wiederholt werden, bis bei der Validierung keine Warnmitteilung mehr ausgegeben wird. Ist dies der Fall, kann die Warenlogistikeinrichtung 16 auf der Grundlage des geänderten 2D-Planungsmodells 18 für den Betrieb mit Flurförderzeugen 2 auf der Grundlage des geänderten 2D-Fahrzeugmodells 14 realisiert werden. Wird bereits im ersten Schritt keine Warnmitteilung ausgegeben, kann eine Anpassung des 2D-Planungsmodells 18 und/oder des 2D-Fahrzeugmodells 14 entfallen und die Warenlogistikeinrichtung 16 kann auf der Grundlage der ursprünglichen Planung realisiert werden.

Erfolgt die Validierung unter Anpassung des 2D-Fahrzeugmodells 14, bedeutet dies, dass der Betrieb einer bestehenden Warenlogistikeinrichtung 16 durch Einsatz eines veränderten Typs von Flurförderzeug 2 validiert und so verbessert werden kann. In diesem Zusammenhang können auch Erweiterungen oder Anpassungen bestehender Warenlogistikeinrichtungen 16 im Vorfeld der Durchführung dieser Maßnahmen validiert werden.

Gemäß einer weiteren Ausführungsform wird ein Verfahren zum Betreiben einer Warenlogistikeinrichtung 16 angegeben. Die hierfür notwendige Funktionalität wird beispielsweise von der Verarbeitungseinheit 40 der Warenlogistikeinrichtung 16 und einer Fahrzeugsteuerung 38 des Flurförderzeugs 2 bereitgestellt. Für die Durchführung des Verfahrens zum Betreiben der Warenlogistikeinrichtung 16 wird zunächst ein 2D-Betriebsmodell 42 der Warenlogistikeinrichtung 16 bereitgestellt. Die Darstellung in Fig. 2 ist eine Illustration eines solchen 2D-Betriebsmodells 42 der Warenlogistikeinrichtung 16. Dieses weist einen in der Warenlogistikeinrichtung 16 vorhandenen Fahrbereich 20, zumindest einen in diesem Fahrbereich 20 angeordneten Fahrspurengraph 22 und zumindest einen ebenfalls in der Warenlogistikeinrichtung 16 vorhandenen Nichtfahrbereich 28 auf. Auf der Grundlage des 2D-Betriebsmodells 42 steuert und/oder regelt die Verarbeitungseinheit 40 den Fahrbetrieb in der Warenlogistikeinrichtung 16, wobei das 2D-Betriebsmodell 42 nicht die alleinige Grundlage der Steuerung und/oder Regelung ist. Der autonome Fahrbetrieb des Flurförderzeugs 2 wird auch durch die Fahrzeugsteuerung 38 bereitgestellt. Ferner wird ein 2D-Fahrzeugbetriebsmodell 44 bereitgestellt. Fig. 1 ist ebenfalls eine Illustration eines solchen 2D-Fahrzeugbetriebsmodells 44. Es handelt sich um ein 2D-Fahrzeugbetriebsmodell 44 eines in der Warenlogistikeinrichtung 16 betriebenen Flurförderzeugs 2. Das 2D-Fahrzeugbetriebsmodell 44 des Flurförderzeugs 2 beschreibt eine von dem Flurförderzeug 2 beim Betrieb in der Warenlogistikeinrichtung 16 eingenommene Fläche, beispielsweise die von dem Schutzfeld 12 eingenommene Fläche, bezeichnet als 2D-Fahrzeugfläche 15.

Im Rahmen des Verfahrens zum Betreiben der Warenlogistikeinrichtung 16 wird der Fahrbereich 20 der Warenlogistikeinrichtung 16 validiert, indem das zuvor beschriebene Verfahren zum Validieren des zumindest einen Fahrbereichs 20 in einem 2D-Planungsmodell 18 gemäß einem oder mehrerer der zuvor genannten Ausführungsbeispiele durchgeführt wird. Bei der Durchführung dieser Validierung wird als 2D-Planungsmodell 18 der Warenlogistikeinrichtung 16 das 2D-Betriebsmodell 42 der Warenlogistikeinrichtung 16 verwendet. Ebenso wird als 2D-Fahrzeugmodell 14 des Flurförderzeugs 2 das 2D-Fahrzeugbetriebsmodell 44 des Flurförderzeugs 2 verwendet. Die Validierung erfolgt also an der bestehenden Warenlogistikeinrichtung 16.

Wird am Ende der Validierung eine Warnmitteilung ausgegeben, kann in der Warenlogistikeinrichtung 16 der Fahrbereich 20, der Nichtfahrbereich 28 und/oder der Fahrspurgengraph 22 verändert werden. Parallel erfolgt eine Anpassung des Fahrbereichs 20, des Nichtfahrbereichs 28 und des Fahrspurengraphs 22 in dem 2D-Betriebsmodell 42. Eine Anpassung des Nichtfahrbereichs 28 ist beispielsweise durch Veränderung der Grenzen von Nichtfahrbereichen 28 möglich, deren Grenzen nicht durch Infrastrukturelemente, wie Wände, Durchfahrten oder dergleichen eines Gebäudes der Warenlogistikeinrichtung 16 bestimmt sind. Beispielsweise können Fahrverbotsbereiche, die anderen Verwendungen vorbehalten sind, beispielsweise Fußgängerbereiche, verändert werden. Der Fahrspurengraph 22 lässt sich in der Regel durch entsprechende Anpassung desselben an der Verarbeitungseinheit 40 verändern, ebenso der Fahrbereich 20. Eine Veränderung der in der Warenlogistikeinrichtung 16 betriebenen Flurförderzeuge 2 bzw. der zugehörigen Modelle kann ebenso vorgesehen sein. Eine Anpassung der Flurförderzeuge 2 erfordert jedoch eine Änderung der Fahrzeugflotte und ist mitunter mit hohen Investitionen verbunden. Eine weitere Möglichkeit zur Anpassung ist eine Veränderung der verwendeten Lastträger 8. Ein Lastträger 8 mit geringeren Abmessungen erlaubt eine Verkleinerung des Schutzfelds 12.

Auf der Grundlage der geänderten Daten, insbesondere auf der Grundlage des geänderten 2D-Betriebsmodells 42 der Warenlogistikeinrichtung 16, kann erneut eine Validierung, nun des geänderten 2D-Betriebsmodells 42, durchgeführt werden. Es werden die Schritte der Anpassung und der Validierung beispielsweise iterativ wiederholt, bis keine Warnmitteilung mehr ausgegeben wird. Anschließend kann die Warenlogistikeinrichtung 16 auf der Grundlage des geänderten 2D-Betriebsmodells 42 betrieben werden. Sofern bereits im ersten Schritt keine Warnmitteilung ausgegeben wurde und die Validierung des 2D-Betreibsmodells 42 somit erfolgreich war, kann der Betrieb auf der Grundlage des ursprünglichen 2D-Betriebsmodells 42 erfolgen.

Schließlich ist gemäß einem weiteren Ausführungsbeispiel eine Warenlogistikeinrichtung 16 vorgesehen, die die Verarbeitungseinheit 40 umfasst. Auf der Grundlage des 2D-Betriebsmodells 42 der Warenlogistikeinrichtung 16 und auf der Grundlage des 2D-Fahrzeugbetriebsmodells 44 des in der Warenlogistikeinrichtung 16 betriebenen Flurförderzeugs 2 wird eine Validierung des Fahrbereichs 20 vorgenommen, indem auf der Verarbeitungseinheit 40 das bereits erläuterte Validierungsverfahren durchgeführt wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Flurförderzeug
- 4: Chassis
- 6: Lastgabel
- 8: Lastträger
- 10: Last
- 12: Schutzfeld
- 14: 2D-Fahrzeugmodell
- 15: 2D-Fahrzeugfläche
- 16: Warenlogistikeinrichtung
- 18: 2D-Planungsmodell
- 20: Fahrbereich
- 22: Fahrspurengraph
- 24: Knoten
- 26: Kanten
- 28: Nichtfahrbereich
- 29: Infrastrukturelement
- 30: überstrichene Fläche
- 32: Überschneidung
- 34: Parkposition
- 36: Palettenplatz
- 38: Fahrzeugsteuerung
- 40: Verarbeitungseinheit
- 41: Speichermedium
- 42: 2D-Betriebsmodell
- 44: 2D-Fahrzeugbetriebsmodell
- 45: Warnmitteilung
- 46: Sensor
- 48: Trajektorie
- 49: Route
- 50: Umkreis
- r: Radius

## Patentansprüche

1. Verfahren zum Validieren von zumindest einem Fahrbereich (20) in einem 2D-Planungsmodell (18) einer Warenlogistikeinrichtung (16), die folgenden Schritte umfassend:
a) Bereitstellen des 2D-Planungsmodells (18) der Warenlogistikeinrichtung (16), aufweisend: zumindest einen Fahrbereich (20), zumindest einen in dem Fahrbereich (20) angeordneten Fahrspurengraph (22) und zumindest einen Nichtfahrbereich (28), wobei in dem Fahrspurengraph (22) statische Parameter vorhanden sind, welche bei der Berechnung einer Trajektorie (48) eines Flurförderzeugs (2) entlang des Fahrspurengraphs (22) berücksichtigt werden,
b) Bereitstellen eines 2D-Fahrzeugmodells (14) des Flurförderzeugs (2), wobei das 2D-Fahrzeugmodell (14) eine von dem Flurförderzeug (2) beim Betrieb in der Warenlogistikeinrichtung (16) in Anspruch genommene 2D-Fahrzeugfläche (15) beschreibt,
c) Bestimmen einer Trajektorie (48) des Flurförderzeugs (2) entlang zumindest einem Abschnitt des Fahrspurengraphs (22), insbesondere ausschließlich, auf der Grundlage der in dem Fahrspurengraph (22) vorhandenen statischen Parameter,
d) Bewegen des 2D-Fahrzeugmodells (14) entlang der Trajektorie (48) und Bestimmen einer von der 2D-Fahrzeugfläche (15) in dem 2D-Planungsmodell (18) bei der Bewegung des 2D-Fahzeugmodells (14) entlang der Trajektorie (48) überstrichenen Fläche (30),
e) Überprüfen, ob eine Überschneidung (32) zwischen der überstrichenen Fläche (30) und dem Nichtfahrbereich (28) vorliegt,
f) Ausgeben eines Ergebnisses der Validierung, wobei als Ergebnis zumindest eine Warnmitteilung (45) ausgegeben wird, falls eine Überschneidung (32) festgestellt wird.

2. Verfahren nach Anspruch 1, wobei der Fahrspurengraph (22) Knoten (24) und die Knoten (24) verbindende Kanten (26) aufweist, wobei als statische Parameter in dem Fahrspurengraph Informationen gemäß zumindest einem der folgenden Merkmale vorhanden sind:
- Positionen der Knoten (24) in dem 2D-Planungsmodell (18),
- Positionen und/oder Orientierungen der Kanten (26) in dem 2D-Planungsmodell (18),
- eine erlaubte Abweichung der Trajektorie von den Knoten (24) und/oder Kanten (26).

3. Verfahren nach Anspruch 1 oder 2, wobei die Bestimmung der Trajektorie (48) des Flurförderzeugs (2) in Schritt c) ferner in Abhängigkeit von einer Orientierung der Bewegung, eines für die Bewegung angenommenen Lenkwinkels und/oder einer für die Bewegung angenommenen Geschwindigkeit des Flurförderzeugs (2) erfolgt.

4. Verfahren nach einem der Ansprüche 1 bis 3, wobei bei der Bestimmung der Trajektorie (48) in Schritt c) statische Fahrzeugparameter betreffend eine Manövrierfähigkeit des Flurförderzeugs (2) berücksichtigt werden, wobei die Manövrierfähigkeit des Flurförderzeugs (2) insbesondere durch zumindest einen der folgenden Parameter bestimmt ist:
- ein minimaler und/oder maximaler Kurvenradius,
- Abmessungen des Flurförderzeugs (2),
- Abmessungen des Flurförderzeugs (2) einschließlich eines transportierbaren Lastträgers (8) und/oder einer transportierbaren Last (10).

5. Verfahren nach einem der vorhergehenden Ansprüche, wobei die in Schritt d) berücksichtigte 2D-Fahrzeugfläche (15) durch zumindest ein Schutzfeld (12) des Flurförderzeugs (2) bestimmt ist.

6. Verfahren nach Anspruch 5, wobei das Schutzfeld (12) eine konstante Geometrie hat,
oder
wobei ein Schutzfeldsatz, aufweisend eine Vielzahl von Schutzfeldern (12) mit jeweils konstanter Geometrie, vorhanden ist und für die Bewegung des Flurförderzeugs (2) entlang der Trajektorie (48), insbesondere in Abhängigkeit von einer Position des Flurförderzeugs (2), auf der Trajektorie (48) zumindest ein Schutzfeld (12) aus dem Schutzfeldsatz ausgewählt wird, wobei die Auswahl insbesondere in Abhängigkeit von einer Orientierung der Bewegung, eines für die Bewegung angenommenen Lenkwinkels und/oder einer für die Bewegung angenommenen Geschwindigkeit des Flurförderzeugs (2) erfolgt, wobei ferner insbesondere als Geschwindigkeit der Bewegung eine minimale Geschwindigkeit angenommen wird.

7. Verfahren nach einem der Ansprüche 4 bis 6, wobei das Schutzfeld (12) zusätzlich einen von dem Flurförderzeug (2) transportierbaren Lastträger (8) und/oder eine von dem Flurförderzeug (2) transportierbare Last (10) berücksichtigt.

8. Verfahren nach einem der vorhergehenden Ansprüche, wobei der zumindest eine Nichtfahrbereich (28) zumindest teilweise durch ein Infrastrukturelement, insbesondere ein Gebäudeelement, der Warenlogistikeinrichtung (16) definiert ist.

9. Verfahren nach einem der vorhergehenden Ansprüche, bei dem bestimmt wird, ob zumindest eine Trajektorie (48) für das Flurförderzeug (2) berechnet werden kann, so dass sich eine vollständige Befahrung des Fahrspurengraphs (22)ergibt.

10. Verfahren nach einem der vorhergehenden Ansprüche, bei dem die Bestimmung der Trajektorie (48) des Flurförderzeugs (2) entlang des zumindest einen Abschnitts des Fahrspurengraphs (22) unter Anwendung vorbestimmter Rechenvorschriften und/oder hinterlegter Trajektorienmodelle auf die in dem Fahrspurengraph vorhandenen statischen Parameter erfolgt.

11. Verfahren nach einem der vorhergehenden Ansprüche, bei dem in einem Fall, dass in Schritt e) zumindest eine Überschneidung (32) zwischen der überstrichenen Fläche (30) und dem Nichtfahrbereich (28) festgestellt wird, eine weitere Berechnung einer Trajektorie (48), insbesondere eine weitere Berechnung einer abschnittsweisen Trajektorie (48) in einem Abschnitt des Fahrspurengraphs (22), in dem die Überschneidung (32) festgestellt wird, durchgeführt wird, wobei für die weitere Berechnung der Trajektorie (48), alternative vorbestimmte Rechenvorschriften und/oder alternative hinterlegte Trajektorienmodelle auf die in dem Fahrspurengraph (22) vorhandenen statischen Parameter angewandt werden.

12. Computerlesbares Speichermedium (41) mit darauf gespeicherten Programmcodemitteln, die einen Computer (40) dazu veranlassen, das Verfahren nach einem der Ansprüche 1 bis 11 durchzuführen.

13. Verfahren zum Realisieren einer Warenlogistikeinrichtung (16), die folgenden Schritte umfassend:
a) Erstellen eines 2D-Planungsmodells (18) der Warenlogistikeinrichtung (16), aufweisend: zumindest einen Fahrbereich (20), zumindest einen in dem Fahrbereich (20) angeordneten Fahrspurengraph (22) und zumindest einen Nichtfahrbereich (28), wobei in dem Fahrspurengraph (22) statische Parameter vorhanden sind, welche bei der Berechnung einer Trajektorie (48) des Flurförderzeugs (2) entlang des Fahrspurengraphs (22) berücksichtigt werden,
b) Bereitstellen eines 2D-Fahrzeugmodells (14) eines für den Betrieb in der Warenlogistikeinrichtung (16) vorgesehenen Flurförderzeugs (2), wobei das 2D-Fahrzeugmodell (14) eine von dem Flurförderzeug (2) beim Betrieb in der Warenlogistikeinrichtung (16) in Anspruch genommene 2D-Fahrzeugfläche (15) beschreibt
c) Validieren des zumindest einen Fahrbereichs (20) des 2D-Planungsmodells (18), indem das Verfahren nach einem der Ansprüche 1 bis 11 an dem 2D-Planungsmodell (18) unter Verwendung des 2D-Fahrzeugmodells (14) durchgeführt wird, wobei
sofern bei der Validierung gemäß dem Verfahren nach einem der Ansprüche 1 bis 11 in Schritt f) dieses Verfahrens als Validierungsergebnis eine Warnmitteilung (45) ausgegeben wird,
d) der zumindest eine Fahrbereich (20), der zumindest eine Nichtfahrbereich (28) und/oder der Fahrspurengraph (22) in dem 2D-Planungsmodell (18)
und/oder
ein für den Betrieb in der Warenlogistikeinrichtung (16) vorgesehenes Flurförderzeug (2) in dem 2D-Fahrzeugmodell (14) geändert werden/wird und
ein geändertes 2D-Planungsmodell (18) und/oder ein geändertes 2D-Fahrzeugmodell (14) bereitgestellt wird,
e) erneutes Durchführen der Schritte c) bis e) unter Verwendung des geänderten 2D-Planungsmodells (18) und/oder des geänderten 2D-Fahrzeugmodells (14) bis in Schritt f) dieses Verfahrens als Validierungsergebnis keine Warnmitteilung mehr ausgegeben wird,
f) Realisieren der Warenlogistikeinrichtung (16) mit in dem zumindest einen in dem geänderten 2D-Planungsmodell (18) vorhandenen Fahrbereich (20), Fahrspurengraph (22) und/oder Nichtfahrbereich (28) und/oder mit dem in dem geänderten 2D-Fahrzeugmodell (14) beschriebenen Flurförderzeug (2),
oder
Realisieren der Warenlogistikeinrichtung (16) mit dem zumindest einen in dem 2D-Planungsmodell (18) vorhandenen Fahrbereich (20), Fahrspurengraph (22) und/oder Nichtfahrbereich (28) sowie mit dem in dem 2D-Fahrzeugmodell (14) beschriebenen Flurförderzeug (2), sofern bei der Validierung gemäß dem Verfahren nach einem der Ansprüche 1 bis 11 in Schritt f) dieses Verfahrens keine Warnmitteilung (45) ausgegeben wird.

14. Verfahren zum Betreiben einer Warenlogistikeinrichtung (16), die folgenden Schritte umfassend:
a) Bereitstellen eines 2D-Betriebsmodells (42) der Warenlogistikeinrichtung (16), wobei das 2D-Betriebsmodell (42) der Warenlogistikeinrichtung (16) aufweist:
zumindest einen in der Warenlogistikeinrichtung (16) vorhandenen Fahrbereich (20), zumindest einen in dem Fahrbereich (20) angeordneten Fahrspurengraph (22) und zumindest einen in der Warenlogistikeinrichtung (16) vorhandenen Nichtfahrbereich (28), wobei in dem Fahrspurengraph (22) statische Parameter vorhanden sind, welche bei der Berechnung einer Route (49) des Flurförderzeugs (2) unter Verwendung des Fahrspurengraphs (22) im Fahrbetrieb berücksichtigt werden, wobei der Fahrbetrieb in der Warenlogistikeinrichtung (16) unter Verwendung des 2D-Betriebsmodells (42) gesteuert und/oder geregelt wird,
b) Bereitstellen eines 2D-Fahrzeugbetriebsmodells (44) eines in der Warenlogistikeinrichtung (16) betriebenen Flurförderzeugs (2), wobei das 2D-Fahrzeugbetriebsmodell (44) des Flurförderzeugs (2) eine von dem Flurförderzeug (2) während des Fahrbetriebs in Anspruch genommene 2D-Fahrzeugfläche (15), beschreibt,
c) Validieren des Fahrbereichs (20) in der Warenlogistikeinrichtung (16), indem das Verfahren nach einem der Ansprüche 1 bis 11 durchgeführt wird, wobei als 2D-Planungsmodell (18) das 2D-Betriebsmodell (42) der Warenlogistikeinrichtung (16) und als 2D-Fahrzeugmodell (14) das 2D-Fahrzeugbetriebsmodell (44) des Flurförderzeugs (16) verwendet werden,
- sofern bei der Validierung gemäß dem Verfahren nach einem der Ansprüche 1 bis 11 in Schritt f) dieses Verfahrens als Validierungsergebnis eine Warnmitteilung (45) ausgegeben wird,
d) Verändern des zumindest einen Fahrbereichs (20), des zumindest einen Nichtfahrbereichs (28) und/oder des Fahrspurengraphs (22) in der Warenlogistikeinrichtung (16) und in dem 2D-Betriebsmodell (42)
und/oder
Verändern des in der Warenlogistikeinrichtung (16) betriebenen Flurförderzeugs (2) und des zugehörigen 2D-Fahrzeugbetriebsmodells (44) und
Bereitstellen eines geänderten 2D-Betriebsmodells (42) und/oder eines geänderten 2D-Fahrzeugbetriebsmodells (44),
e) erneutes Durchführen der Schritte c) bis e) unter Verwendung des geänderten 2D-Betriebsmodells (42) und/oder unter Verwendung des geänderten 2D-Fahrzeugbetriebsmodells (44), bis in Schritt f) dieses Verfahrens als Validierungsergebnis keine Warnmitteilung mehr ausgegeben wird,
f) Betreiben der Warenlogistikeinrichtung (16) mit dem in dem geänderten 2D-Betriebsmodell (42) vorhandenen Fahrbereich (20), Fahrspurengraph (22) und/oder Nichtfahrbereich (28) und/oder mit dem in dem geänderten 2D-Fahrzeugbetriebsmodell (44) beschriebenen geänderten Flurförderzeug (2)
oder
Betreiben der Warenlogistikeinrichtung (16) mit dem in dem 2D-Betriebsmodell (42) vorhandenen Fahrbereich (20), Fahrspurengraph (22) und Nichtfahrbereich (28) sowie mit dem in dem 2D-Fahrzeugbetriebsmodell (44) beschriebenen Flurförderzeug (2), sofern bei der Validierung gemäß dem Verfahren nach einem der Ansprüche 1 bis 11 in Schritt f) dieses Verfahrens als Validierungsergebnis keine Warnmitteilung ausgegeben wird.

15. Warenlogistikeinrichtung (16), umfassend eine Verarbeitungseinheit (40) und zumindest ein in der Warenlogistikeinrichtung (16) betreibbares Flurförderzeug (2), wobei in der Verarbeitungseinheit (40) ein 2D-Betriebsmodell (42) der Warenlogistikeinrichtung (16) und ein 2D-Fahrzeugbetriebsmodell (44) des Flurförderzeugs (2) vorhanden sind, wobei das 2D-Betriebsmodell (42) der Warenlogistikeinrichtung (16) aufweist:
zumindest einen in der Warenlogistikeinrichtung (16) vorhandenen Fahrbereich (20), zumindest einen in dem Fahrbereich (20) angeordneten Fahrspurengraph (22) und zumindest einen in der Warenlogistikeinrichtung (16) vorhandenen Nichtfahrbereich (28), wobei in dem Fahrspurengraph (22) statische Parameter vorhanden sind, und wobei die Verarbeitungseinheit (40) dazu ausgebildet und eingerichtet ist, einen Fahrbetrieb in der Warenlogistikeinrichtung (16) auf der Grundlage des Fahrbereichs (20), des Fahrspurengraphs (22) und des Nichtfahrbereichs (28) zu steuern und/oder zu regeln, wobei die Verarbeitungseinheit (40) ferner dazu ausgebildet und eingerichtet ist, im Fahrbetrieb bei der Berechnung einer Route (49) des Flurförderzeugs (2) unter Verwendung des Fahrspurengraphs (22) die in dem Fahrspurengraph (22) vorhandenen statischen Parameter zu berücksichtigen,
- das 2D-Fahrzeugbetriebsmodel (44) des in der Warenlogistikeinrichtung (16) betreibbaren Flurförderzeugs (2) eine von dem Flurförderzeug (2) im Betrieb in Anspruch genommene 2D-Fahrzeugfläche (15) beschreibt,
wobei die Verarbeitungseinheit (40) ferner dazu ausgebildet und eingerichtet ist den Fahrbereich (20) zu validieren, indem sie das Verfahren nach einem der Ansprüche 1 bis 11 durchführt, wobei als 2D-Planungsmodell (18) das 2D-Fahrzeugbetriebsmodell (44) und als 2D-Fahrzeugmodell das 2D-Fahrzeugbetriebsmodel (44) verwendet werden.
